# EUROPEAN PATENT APPLICATION

(11) **EP 2 667 347 A1**
(43) Date of publication of application: **27.11.2013**
(21) Application number: 12736838.9
(22) Date of filing: 19.01.2012
(51) Int. Cl.: G06Q 30/06, G06F 17/30, G06Q 30/02, G06Q 30/08

(54) **INFORMATION RETRIEVAL SERVICE PROVISION DEVICE AND METHOD, BUILDING DEVICE FOR INFORMATION RETRIEVAL SERVICE PROVISION-USE DATABASE, AS WELL AS COMPUTER PROGRAM SIGNAL**

(30) Priority: 21.01.2011 JP 2011011090
(71) Applicant: National Institute of Information and Communication Technology, Tokyo 184-8795 (JP)
(72) Inventor: TORISAWA, Kentaro, Koganei-shi Tokyo 184-8795 (JP); OOTAKE, Kiyonori, Koganei-shi Tokyo 184-8795 (JP); YAN, Yulan, Koganei-shi Tokyo 184-8795 (JP); DE SAEGER, Stijn, Koganei-shi Tokyo 184-8795 (JP); VARGA, Istvan, Koganei-shi Tokyo 184-8795 (JP); KAZAMA, Junichi, Koganei-shi Tokyo 184-8795 (JP)
(74) Representative: Vossius & Partner
(86) International application number: PCT/JP2012/051063
(87) International publication number: WO 2012/099196

(57) **Abstract**

An information retrieval service system 40 includes: a storage device 64 for storing a question corpus; a clustering unit 100 clustering the questions and determining a prototype of each cluster; an auctioning unit 104 executing auctions for the prototypes; an updating unit 112 associating each of the questions with a winning bidder of the prototype sentence of the cluster to which the question belongs; a question-URL correspondence DB 68 storing, for each of the questions, a URL designated by the winning bidder; a question-searching unit 132 receiving a search request and searching for a question having the shortest distance to the search request; and URL searching units 134, 136 and a query issuing unit 138, transmitting the query generated from the search request to the URL corresponding to the searched out question and transmitting resulting information to an information service using terminal 48.

## Description

### TECHNICAL FIELD

The present invention relates to information retrieval service for retrieving and presenting information required by a user based on an utterance of natural language sentence. More specifically, the present invention relates to a service for allocating a request for information retrieval from a user to any information service provider to have a piece of information provided by the information service provider directly presented to the user.

### BACKGROUND ART

A vast amount of information flows over the Internet, with the amount increasing day by day. No matter whatever useful information is posted on the Internet, it is meaningless unless it can be found exactly. "Search sites" have emerged to meet the demand of network users.

Search sites can be roughly classified into two types. A search site of the first type is based on collection of URIs (Uniform Resource Identifiers) automatically or manually collected by an administrator of the search site, with the URIs classified in accordance with their contents. The user searches for a site he/she wants to use in accordance with the classification of the search site. It is often the case in such a site that a range of classification is limited and a scheme is designed for searching a desired word or a string of words in the limited range. In a search site of the second type, indexes of sites in accordance with words or strings of words are prepared in advance. Upon reception of a search request designating a word or a string of words, searching is done using the indexes and the results of search are returned. Here, it is a common practice to rate or score the results of search and to present the results to the user starting from those having highest scores. Therefore, what matters here is how to rate or keep the scores. Depending on the manner of scoring, possibility to present a web site exactly on the mark about the object of search becomes higher.

When using a search site of the first type, it is necessary for the user to know at least the classification of the piece of information to be searched for. In addition, the manner of classification must match the one used by the search site. Further, such a site has a problem that registration of a large number of web sites is difficult. If the number increases, it follows that a huge number of web sites are listed under one category, and it becomes very difficult to find a desired web site. When one searches for a web site using a word or a string of words at such a search site, it is highly likely that he/she fails to obtain a desired piece of information, if he/she does not know an effective combination of words.

The search site of the second type is easier to use than the search site of the first type, since results are displayed when a word or a string of words is simply entered. Even when using a site of this type, it is still necessary to know what word or what string of words is good to get an exact result, in order to obtain the desired information. Otherwise, all the displayed web sites would be irrelevant to the user's need.

Conversely, from the viewpoint of an information service provider, the service it provides cannot be even noticed by a user unless it is displayed high among the search results. Therefore, site operators face a problem of how to put his/her site high on the list of search results, which is of a different dimension from the technique of providing services.

In view of these problems, a device for providing service information allowing search of service provider information that matches search conditions based on current position information or requested service contents information of the user, rather than simply responding to a search request from the user, has been proposed (JP 2010-282410A). The service information-providing device issues a request for providing information based on a user's request to the searched service provider, and provides the user with the resulting service information.

### SUMMARY OF INVENTION

### TECHNICAL PROBLEM

According to JP 2010-282410A mentioned above, the device for providing service information disclosed therein is capable of providing the user with service information corresponding to the current position of the user. The device for providing service information, however, has a problem that the service provided by the device itself does not lead to any profit. The problem is not limited to the device. Almost every service provided on the Internet always faces the problem of how to turn the service to a successful business. Eventually, they come to a typical solution of placing advertisements on the search result or information-providing screen to earn advertising revenues.

Services relying solely on advertisements are not favorable as a business model. A mechanism that ties the value of service itself to business is desired.

Further, from the viewpoint of a service provider, there is a problem that, in the service information-providing system described above, the service it provides is merely one service among many other services. Specifically, every service provider faces a problem that it is difficult to entice potential users to its own service with high possibility. Service providers desire a mechanism that presents his/her own service to the user as a search result, with the request for providing information narrowed down to a certain type satisfying specific conditions.

Conventionally, however, such a mechanism has not been known, and operation of such a mechanism is uncertain as a business utilizing the Internet, both to the service information providers and the service providers.

Therefore, an object of the present invention is to provide, in operating an information retrieving service in response to a search request for the services on the Internet, a device for providing information retrieval service that can establish connection between the service itself with business profit.

Another object of the present invention is to adopt, in operating an information retrieving service in response to a search request for the services on the Internet, a mechanism for exclusively returning a service by a specific service provider in response to a search request satisfying specific conditions, and to provide a device and method for providing information retrieving service that can establish such a mechanism as a business, as well as to provide a device for building a database therefor.

### SOLUTION TO PROBLEM

According to a first aspect, the present invention provides an information retrieval service-providing device, including: a machine-readable storage device storing a plurality of machine-readable sentences; a network interface; an auction executing device, connected to the storage device and the network interface, associating each of the plurality of sentences stored in the storage device with a winning bidder and with a contract price by an online auction through the network interface; a URI storage device, connected to the storage device, the network interface and the auction executing device, receiving and storing, for each of the plurality of sentences, a URI designated through the network interface by the winning bidder associated with the sentence by the auction executing device; a sentence searching device, connected to the network interface and the storage device, searching, in response to reception of an information search request sentence through the network interface, for a sentence having shortest defined distance to the search request sentence among the plurality of sentences stored in the storage device; and an information transmitting device, connected to the sentence searching device and the URI storage device, transmitting a query generated from the search request sentence to the URI stored in the URI storage device corresponding to the sentence searched out by the sentence searching device, and thereby causing information obtained from the URI to be transmitted to a terminal that transmitted the search request sentence.

Preferably, the auction executing device includes: a representative sentence determining device, connected to the storage device, classifying the plurality of sentences stored in the storage device into a plurality of clusters using a distance defined between each sentence as a reference, and determining a representative sentence representing each cluster; a representative sentence auction executing device, connected to the representative sentence determining device and the network interface, executing an on-line auction for each of the representative sentences and thereby determining a winning bidder and a contract price for each of the representative sentences; a price allocating device connected to the representative sentence auction executing device and the storage device, associating, in response to completion of the auction by the representative sentence auction executing device, each of the plurality of sentences with the winning bidder and with the contract price of the representative sentence of the cluster to which the sentence belongs; and a URI storage device, connected to the network interface, the storage device and the price allocating device, storing, for each of the plurality of sentences, in response to an input of a URI from the winning bidder associated with the sentence through the network interface, the URI in association with the sentence.

More preferably, the distance used in the representative sentence determining device and the sentence searching device is calculated by the same method.

More preferably, the information transmitting device includes: a mapping rule storage device storing, for each of the URIs stored in the URI storage device, a query template for generating a query to be transmitted to the URI and a mapping rule for mapping a word included in the search request sentence to a word inserting position of the query template to generate the query; a parsing device, in response to reception of an information search request sentence by the sentence searching device, parsing the search request sentence, attaching an attribute to each word and outputting a search request sentence with attribute; a query transmitting device, generating a query based on the sentence searched out by the sentence searching device and on the template and the mapping rule stored in the mapping rule storage device corresponding to the URI associated with the sentence, and transmitting the query to the URI stored in the URI storage device corresponding to the sentence searched out by the sentence searching device; and an information transferring device causing a reply to the query transmitted by the query transmitting device to be transferred to a terminal that transmitted the search request sentence.

Each of the representative sentences may include a keyword having attached thereto a predetermined type of attribute and an attribute value. The auction executing device may include: an inclusion relation storage device storing, for each type of attribute, inclusion relation information defining an inclusion relation of attribute value; a bid-placing device receiving, for each of the representative sentences, a bid from a bidder designating, for each type of attribute of a keyword included in the representative sentence, an attribute value and a bidding price; and a winning bidder determining device determining, for the bids received by the bid-placing device, a winning bidder of each representative sentence by determining mutually exclusive range of successful bidding in accordance with the bidding price and the inclusion relation stored in the inclusion relation storage device.

Preferably, the winning bidder determining device includes: an inclusion relation determining device determining, for a plurality of bids placed for the same representative sentence, designating different attribute values with respect to the same type of attribute of a keyword, inclusion relation between ranges determined respectively by the designated attribute values, based on the inclusion relation related to the attribute stored in the inclusion relation storage device; and a device determining a range of winning bid designated by the attribute value for the representative sentence in accordance with the result of determination of inclusion relation by the inclusion relation determining device and determining, for each winning bid range, a winning bidder in accordance with the bidding price designating corresponding attribute value.

More preferably, the information retrieval service-providing device further includes a charging device, connected to the information transmitting device, executing, in response to transmission of information by the information transmitting device, a charging process in accordance with the winning bidder and the contract price corresponding to the sentence searched out by the sentence searching device as a trigger of the transmission.

According to a second aspect, the present invention provides a device for building a database to be used for providing an information retrieval service, including: a machine-readable storage device storing a plurality of machine-readable sentences; a network interface; an auction executing device, connected to the storage device and the network interface, associating each of the plurality of sentences stored in the storage device with a winning bidder and with a contract price by an online auction through the network interface; a URI storage device connected to the storage device, the network interface and the auction executing device, receiving and storing, for each of the plurality of sentences, a URI designated through the network interface by the winning bidder associated with the sentence by the auction executing device; and an associating device associating the plurality of sentences stored in the storage device with URIs stored in the URI storage device.

According to a third aspect, the present invention provides an information retrieval service-providing device, including: a machine-readable first storage device storing a plurality of machine-readable sentences; a network interface; a machine-readable second storage device storing, for each of the plurality of sentences stored in the first storage device, a user and a specific URI; and a sentence searching device, connected to the network interface and the first storage device, searching, in response to reception of an information search request sentence through the network interface, for a sentence having shortest defined distance to the search request sentence among the plurality of sentences stored in the first storage device; further including an information transmitting device, connected to the sentence searching device and the second storage device, transmitting a query generated from the search request sentence to the URI stored in the second storage device corresponding to the sentence searched out by the sentence searching device, and thereby causing information obtained from the URI to be transmitted to a terminal that transmitted the search request sentence.

According to a fourth aspect, the present invention provides, in a computer connected to a machine readable storage device storing a plurality of sentences and a network interface, an information retrieval service-providing method, including: an auction executing step of associating each of the plurality of sentences stored in the storage device with a winning bidder and with a contract price by an online auction through the network interface; a URI storage step of receiving and storing in the storage device, for each of the plurality of sentences, a URI designated through the network interface by the winning bidder associated with the sentence at the auction executing step; a sentence searching step of searching, in response to reception of an information search request sentence through the network interface, for a sentence having a prescribed relation to the search request sentence among the plurality of sentences stored in the storage device; and an information transmitting step of transmitting a query generated from the search request sentence to the URI stored in the URI storage device corresponding to the sentence searched out at the sentence searching step, and thereby causing information obtained from the URI to be transmitted to a terminal that transmitted the search request sentence.

According to a fifth aspect, the present invention provides a computer program signal realized on a carrier wave. The computer program signal includes: an auction executing code segment, associating each of a plurality of sentences stored in a machine-readable storage device with a winning bidder and with a contract price by an online auction; a URI storage code segment, receiving on-line and storing in the storage device, for each of the plurality of sentences, a URI designated by the winning bidder associated with the sentence by the auction executing code segment; a sentence searching code segment, searching, in response to reception of an information search request sentence on-line, for a sentence having shortest defined distance to the search request sentence among the plurality of sentences stored in the storage device; and an information transmitting code segment, transmitting a query generated from the search request sentence to the URI stored in the URI storage device corresponding to the sentence searched out by the sentence searching code segment, and thereby causing information obtained from the URI to be transmitted to a terminal that transmitted the search request sentence.

The foregoing and other objects, features, aspects and advantages of the present invention will become more apparent from the following detailed description of the present invention when taken in conjunction with the accompanying drawings.

### BRIEF DESCRIPTION OF DRAWINGS

Fig. 1 is a block diagram showing an overall configuration of an information-providing system in accordance with an embodiment of the present invention.
Fig. 2 is a block diagram showing an information retrieving service system adopted in the information-providing system shown in Fig. 1.
Fig. 3 illustrates how a prototype sentence is to be selected from natural language sentences used for information retrieval, in the first embodiment.
Fig. 4 is a block diagram showing more detailed configurations of an auctioning unit ad an auction data DB of the information-providing system shown in Fig. 1.
Fig. 5 is a schematic illustration of record configurations of main tables of the auction data DB.
Fig. 6 is a schematic illustration of a screen displayed on a terminal allowing bidding in an auction of questions provided by the information-providing system shown in Fig. 2.
Fig. 7 shows further details of the configurations of auction data DB and an updating unit shown in Fig. 2.
Fig. 8 is a state transition diagram showing transition of screens displayed on the terminal for carrying out a bidding process.
Fig. 9 is a flowchart representing a control structure of an auction bid-closing program executed at the time of bid-closing of an auction, in the information retrieving service system in accordance with the first embodiment.
Fig. 10 is a flowchart representing a control structure of a program executed when a request for information retrieval is received, in the information retrieving service system in accordance with the first embodiment.
Fig. 11 is a block diagram showing a schematic configuration of an information retrieving service system in accordance with a second embodiment of the present invention.
Fig. 12 schematically shows record configurations of a prototype table and a bid details table of the auction data DB in accordance with the second embodiment.
Fig. 13 is a schematic illustration of a bidding initial screen displayed on a terminal from which a bid for a question is to be placed, in the information retrieving service system in accordance with the second embodiment.
Fig. 14 is a schematic illustration of a bid details screen displayed on a terminal from which a bid for a question is to be placed, in the information retrieving service system in accordance with the second embodiment.
Fig. 15 is a schematic illustration of a bid-placing screen displayed on a terminal from which a bid for a question is to be placed, in the information retrieving service system in accordance with the second embodiment.
Fig. 16 is a schematic illustration of a bid details adding screen displayed on a terminal from which a bid for a question is to be placed, in the information retrieving service system in accordance with the second embodiment.
Fig. 17 is a schematic illustration of a bid details screen displayed on a terminal after the bidding process, in the information retrieving service system in accordance with the second embodiment.
Fig. 18 is a schematic illustration of a bid details screen displayed after the bidding process, on a terminal of the service provider that executed the bidding process, in the information retrieving service system in accordance with the second embodiment.
Fig. 19 shows a configuration of an example of attribute tree used in the information retrieving service system in accordance with the second embodiment.
Fig. 20 is a flowchart representing a control structure of a program executed in response to an inquiry related to bidding, by a web server of the information retrieving service system in accordance with the second embodiment.
Fig. 21 is a flowchart representing a control structure of a program executed in response to an input related to bidding, by the web server of the information retrieving service system in accordance with the second embodiment.
Fig. 22 is a flowchart representing a control structure of a program routine for checking details, as a part of the program shown in Fig. 21.
Fig. 23 is a flowchart representing a control structure of an auction bid-closing program executed at the time of bid-closing of an auction, in the information retrieving service system in accordance with the second embodiment.
Fig. 24 is a flowchart representing a control structure of a program executed when a request for information retrieval is received, in the information retrieving service system in accordance with the second embodiment.
Fig. 25 is a schematic illustration of a bidding initial screen displayed on a terminal from which a bid for a question is to be placed, in the information retrieving service system in accordance with the third embodiment.
Fig. 26 is a schematic illustration of a bid details screen displayed on a terminal from which a bid for a question is to be placed, in the information retrieving service system in accordance with the third embodiment.
Fig. 27 is a schematic illustration of a bid-placing screen displayed on a terminal from which a bid for a question is to be placed, in the information retrieving service system in accordance with the third embodiment.
Fig. 28 is a schematic illustration of a screen for entering object range displayed on a terminal from which a bid for a question is to be placed, in the information retrieving service system in accordance with the third embodiment.
Fig. 29 is a schematic illustration of a bid details screen displayed after the bidding process, on a terminal of the service provider that executed the bidding process, in the information retrieving service system in accordance with the third embodiment.
Fig. 30 shows an appearance of a computer system realizing the information retrieving system in accordance with an embodiment of the present invention.
Fig. 31 is a block diagram showing a hardware configuration of the computer system of which appearance is shown in Fig. 30.

### DESCRIPTION OF EMBODIMENTS

In the following description and in the drawings, the same components are denoted by the same reference characters. Therefore, detailed description thereof will not be repeated.

### [First Embodiment]

In the information retrieving service system in accordance with the first embodiment, a large number of natural language sentences are clustered to determine prototype sentences, and service providers bid for the prototype sentences in an auction. Since the natural language sentences are clustered in advance, it is possible to establish correspondence between each of the natural language sentences and each of the service providers by the bidding. When a search request is received, which of the natural language sentences is closest to the search request is determined, and the search request is sent to the information-providing site operated by the service provider that has established the correspondence to the natural sentence. A piece of information returned from the information-providing site in response to the search request is transmitted to the terminal of the original source of search request.

On the other hand, the information retrieval service provider can get the fund for operating the system, through the auction of prototype sentences. Further, the provider can get a prescribed pay-per-hit fee for each search. Thus, the information retrieval service can be operated as a stable business.

As to the service provider, when he/she successfully bids a prototype sentence, he/she can occupy a search request similar to the prototype sentence. Unlike the listing resulting from a common search service, his/her site would not be buried among a large number of search results, and it becomes possible to efficiently entice users to his/her sersice-providing site.

### <Configuration>

### [Overall Configuration]

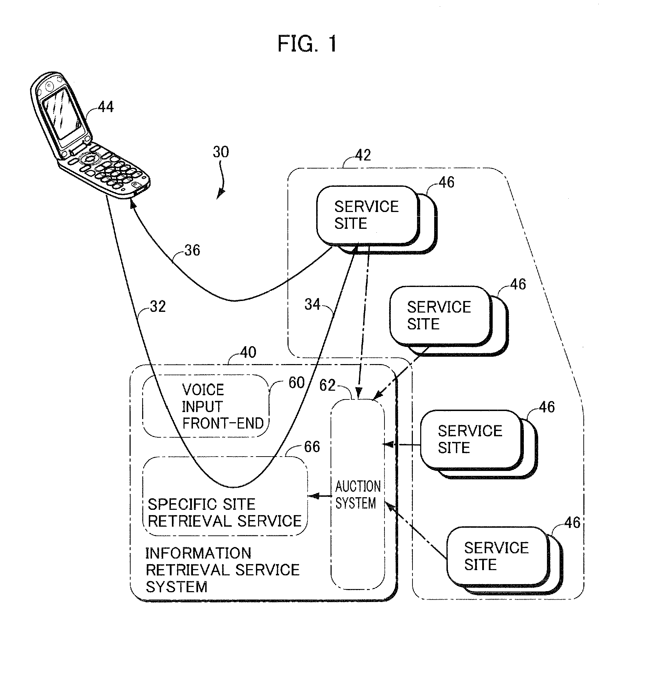

Referring to Fig. 1, a system 30 in accordance with a first embodiment of the present invention includes: a terminal 44 of a user using the service; a plurality of site operators 46 each operating a service site 42; and an information retrieval service system 40, capable of communicating with terminal 44, the plurality of site operators 46 and each of the service sites 42 operated by the site operators 46 through the Internet, and executing a process of holding an auction of prototype sentences obtained by clustering a corpus of a plurality of natural language sentences among the site operators 46, generating and transmitting a query to a service site selected in accordance with the result of auction in response to a search request received from terminal 44, and returning obtained service information to terminal 44. In the present embodiment, a search request 32 from terminal 44 is made by voice. A query 34 to the service site is text information, and service information 36 transmitted from the service site through information retrieval service system 40 to terminal 44 depends on the service site that responds.

Information retrieval service system 40 roughly includes: a voice input front-end 60 executing a voice recognition process on the search request 32 given by voice from terminal 44 and generating an information search request sentence; an auction system 62 clustering a large number of pre-collected natural language sentences, holding an auction of a prototype sentence representing each cluster among a plurality of site operators 46, and building a database necessary for determining an appropriate service site in accordance with the result of auction in response to the information search request; and a specific site retrieval service unit 66 transmitting query 34 to the service site appropriately selected in accordance with the result of auction using the data base build by auction system 62 based on the search request output from voice input front-end 60, and transferring service information 36 returned from the service site to terminal 44.

### [Configuration of Information Retrieval Service System 40]

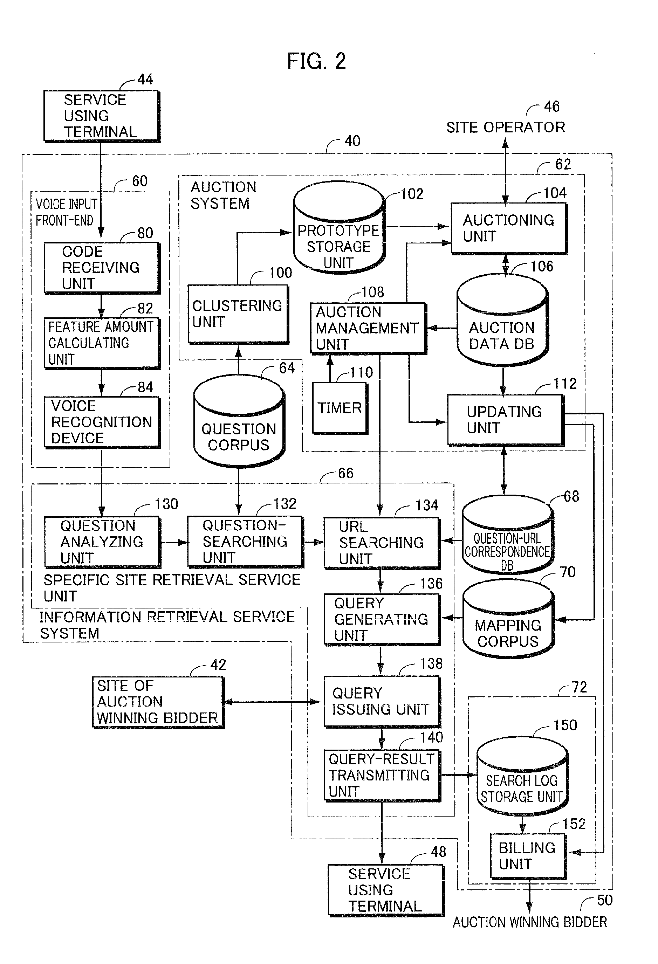

Referring to Fig. 2, information retrieval service system 40 includes: voice input front-end 60 performing voice recognition of a search request by voice from terminal 44 and generating a text-based search request as described above; a corpus storage device 64 storing in advance, in machine-readable format, a question corpus of a large number of questions in natural language; and auction system 62 clustering the questions stored in the question corpus to determine a prototype sentence representing each cluster, holding an auction of each prototype sentence among the plurality of site operators 46 and, thereafter, in accordance with the result of auction, determining a service site corresponding to each question and generating data necessary for information retrieval. Specifically, in the present embodiment, an auction is held not for each of the large number of questions. Rather, after clustering the questions, an auction is held for a question representing each cluster.

The data generated by auction system 62 includes: a question-URL correspondence DB 68, in which pairs of question and URL (Uniform Resource Locators) as one type of URI representing the site operated by the winning bidder of the question are stored; and a mapping corpus 70 storing an input search request and a mapping for generating a query statement to the URL determined with reference to the question-URL correspondence DB 68 based on the search request. Question-URL correspondence DB 68 and mapping corpus 70 are both implemented by databases, each comprise a storage device and a general database program.

The information stored in question-URL correspondence DB 68 is correspondence between each of the questions stored in corpus storage device 64 and the URL operated by the successful bidder.

What is stored in mapping corpus 70 is a mapping rule for a word, when a query to the URL determined corresponding to the search request is generated from a word included in the search request. More specifically, the mapping rule is, for example, a query template prepared in advance, including tags and keywords, such as "I want to know a <store name> restaurant</store name> of <type of food> Japanese food </type of food> in <place name> Kyoto </place name>."' If the search service is in Japanese, the search request is subjected to morphological analysis to obtain attributes of resulting string of morphemes. A keyword at a portion surrounded by respective tags in the template is replaced by a string of characters of morphemes having the attribute same as or similar to the tags. This process is done for every tag to create a query. The mapping rule or rules are prepared by the bidder or bidders in the period from the start to the end of bidding. When the winning bidder is determined, the mapping rule for the successfully bid question is stored in mapping corpus 70.

In the example of mapping rule described above, the keywords such as "Kyoto" and "Japanese food" at portions surrounded by tags are for explicitly indicating the portions to be replaced by strings of word characters obtained from the search request at the time of query generation. Their purpose, however, it not limited thereto. Specifically, these keywords are also used as a type of information when determining which of the keywords is to be replaced by the word obtained from the search request. As a keyword can be associated with the morphemes not only based on the attribute obtained by the morphological analysis but also on semantic distance between words, a query of higher accuracy can be generated.

Information retrieval service system 40 further includes: a specific site retrieval service unit 66, which generates a query from a question based on the search request output from voice input front-end 60 using the question corpus stored in corpus storage device 64, question-URL correspondence DB 68 and the mapping rules stored in mapping corpus 70, and transmits the query to a site operated by the successful bidder of the prototype sentence representing the cluster to which the question belongs, and transmits the obtained information to a service using terminal 48 (in most cases, the same as terminal 44) of a user who transmitted the search request: and a charging unit 72 storing the result of query executed by specific site retrieval service unit 66 as a search log, and performing a charging process for the successful bidder of the auction using the search log and the result of auction (contract unit price of the question) by auction system 62.

Voice input front-end 60 includes: a code receiving unit 80 receiving on-line voice signals encoded and transmitted using a code book at terminal 44 and recovering voice data using the code book; a feature calculating unit 82 calculating acoustic features necessary for voice recognition from the voice data recovered by code receiving unit 80; and a voice recognition device 84 performing voice recognition using the acoustic features calculated by feature calculating unit 82 and outputting resulting text data as the result of recognition. The acoustic features recovered by feature calculating unit 82 is determined depending on the specification of voice recognition device 84 and, by way of example, it is MFCC (Mel-Frequency Cepstrum Coefficient) calculated at every frame having a prescribed frame length and prescribed shift length, ΔMFCC or a power. In the present embodiment, it is expected that not only specific users but also general users will use information retrieval service system 40. Therefore, it is desired that voice recognition device 84 can recognize voices of general speakers. If it is known that the users are limited to a specific group, a mechanism for identifying a speaker may be added to a stage preceding voice recognition device 84, and voice recognition device 84 may utilize an acoustic model suitable for the voice recognition of the speaker's voice.

Auction system 62 includes: a clustering unit 100 clustering a large number of questions forming the question corpus stored in corpus storage device 64 and outputting a prototype sentence as the center of each cluster with a cluster number; and a prototype storage 102 storing the prototype sentences and the cluster numbers output from clustering unit 100 as pairs. Clustering unit 100 also executes a process of allocating, to each question stored in corpus storage device 64, the cluster number to which the question belongs, at the time of clustering.

Auction system 62 further includes: an auctioning unit 104 executing the process of holding an on-line auction of each of the prototype sentences stored in prototype storage 102 for a plurality of site operators 46; a timer 110 for managing operation time of the system; an auction management unit 108 for managing start and end of the auction executed by auctioning unit 104 and managing operation of the specific site retrieval service by specific site retrieval service unit 66 using the result of auction based on time information obtained from timer 110; and an auction data DB 106 storing data necessary for auctioning unit 104 for executing an auction.

Auction system 62 further includes an updating unit 112, connected to auction data DB 106, auction management unit 108, question-URL correspondence DB 68, mapping corpus 70 and charging unit 72, determining, when the closing date and time of auction executed by auctioning unit 104 is reached, the winning bidder and the contract price of each prototype sentence based on the information stored in auction data DB 106 under the control of auction management unit 108, and updating question-URL correspondence DB 68, mapping corpus 70 and information of charging destination by charging unit 72 based on the results. Question-URL correspondence DB 68 is for storing, for each question, information for associating the URL of the site (recorded on a bidder table, which will be described later) operated by the winning bidder who successfully bid the sentence representative of the cluster to which the question belongs with the question. It is noted that the date and time of successful bidding of the auction is generally not the same as the date and time when the auction starts using the result of bidding. After the end of an auction, for example, after two weeks, the specific site retrieval service using the result starts. Therefore, the results of updating of question-URL correspondence DB 68, mapping corpus 70 and charging unit 72 by updating unit 112 are not immediately reflected on the specific site retrieving service. Updating by updating unit 112 means formation of new data, and at the date and time when the specific site retrieval service starts, the new data replaces the previous data. For simplicity of drawings and description, a mechanism for managing such time lag between the updating and the start of actual operation is not shown in the figures.

Specific site retrieval service unit 66 includes: a question-analyzing unit 130 executing the morphological analysis, allocation of semantic tags using a semantic dictionary and parsing of the search request output from voice recognition device 84, and outputting a string of morphemes having attributes such as semantic tags and part-of-speech tags allocated thereto: and a question-searching unit 132 searching and retrieving a question having the shortest distance to the search request represented by the string of morphemes from among the question corpus stored in corpus storage device 64, and outputting the cluster number to which it belongs, together with the analyzed search request. In this search, a normalized question feature vector is formed considering all of the part-of-speech of the word forming morphemes, positions of appearance of the morphemes in the sentence, modification relation between the morphemes and the like, and a question of which inner product between feature vectors is the largest is selected. In the present embodiment, it is assumed that the method of calculating distance used at the time of clustering questions is the same as the method of calculating distance used by question-searching unit 132.

Specific site retrieval service unit 66 further includes: a URL searching unit 134 searching question-URL correspondence DB 68 for the URL of the service site of site operator who successfully bid the question based on the cluster number of the question selected by question-searching unit 132, and outputting the result together with the analyzed search request; a query generating unit 136 generating a query based on the URL and the analyzed search request output from URL searching unit 134 and the mapping rule stored corresponding to the URL in mapping corpus 70, and outputting the query together with the URL; a query issuing unit 138 generating and transmitting over the Internet a URL sentence for information retrieval, from the query output from query generating unit 136 and the URL output from query generating unit 136; and a query-result transmitting unit 140 transferring, in response to the query transmitted from query issuing unit 138, the information transmitted from service site 42 to service using terminal 48 and, at the same time, outputting search log to charging unit 72.

Charging unit 72 includes: a search log storage unit 150 for accumulating search logs output from query-result transmitting unit 140; and a billing unit 152 periodically reading search logs stored in search log storage unit 150 and billing an amount calculated by multiplying the number of searches of the site as the object of searching, corresponding to the sentence as a trigger of search, by a unit price in accordance with the result of auction, to the operator of each site (winning bidder 50 of auction).

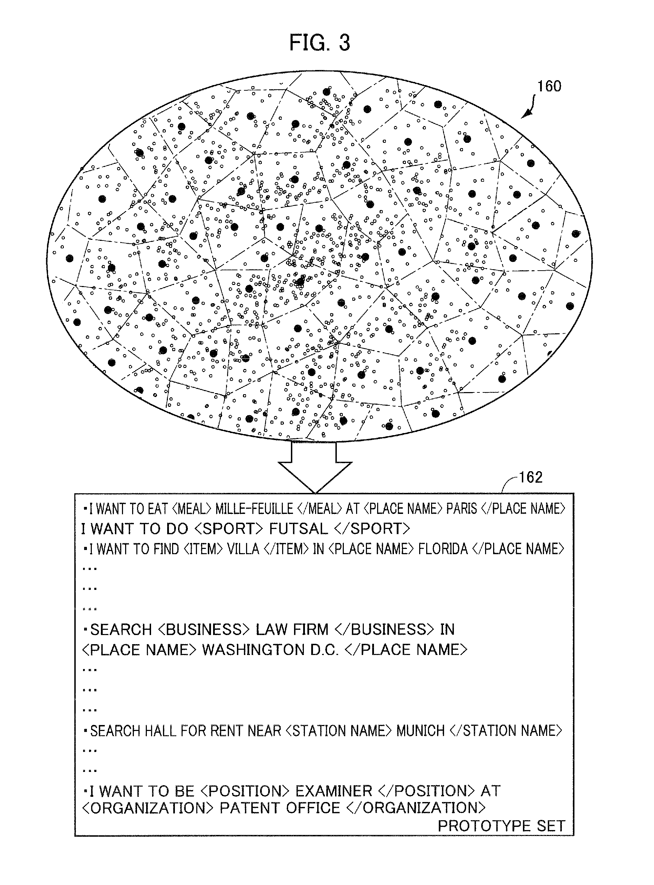

Referring to Fig. 3, the concept of clustering process executed by clustering unit 100 will be described. Corpus storage device 64 stores a large number of questions collected mainly from the Internet. In information retrieval service system 40 in accordance with the present embodiment, for each of the search request given by voice, one that is at the shortest distance among the questions is specified, and the search request is transmitted to the site of that site operator who has successfully bid the question. Therefore, as a preparation, a unit price per one search is determine for each question at the auction, and if a search request close to the question is made, the search request is transferred to the site operated by the successful bidder of the auction for the question, using the search request as a trigger. Every time such a search takes place, the operator of the information retrieval service system 40 is entitled to receive the fee in accordance with the unit price of the question from the winning bidder, in the similar manner as advertisement fee, which will be the resource for operating the information retrieval service system 40.

It is noted, however, that the number of questions is huge and the questions are increasing every moment. Therefore, it is impractical to hold an auction for each question. Accordingly, in the present embodiment, the large number of questions are classified into a plurality of clusters in advance. The clustering method used is not specifically limited. Any method may be used provided that each question belongs to one and only one cluster without fail. In the present embodiment, however, it is necessary to specify a prototype that is at the minimum distance from the search request and, therefore, it is desirable to use a method that defines an evaluation function corresponding to the distance between questions, and then clusters the questions based on the distance. Considering the auctions held for each cluster, it is preferred that the number of clusters is fixed in advance. It is not absolutely necessary to fix the number of clusters, and the number may vary auction by auction. In short, the number of clusters may be selected to be the number convenient for operating information retrieval service system 40.

Referring to Fig. 3, a set 160 of large number of questions is divided into a plurality of clusters as represented by chain-dotted lines. Using a common clustering method, a centroid (center of gravity) of each cluster is determined. In the present embodiment, a question closest to the centroid of each cluster is regarded as a prototype of the cluster, and the prototype sentence is used to represent all the questions belonging to the cluster. Clustering unit 100 shown in Fig. 2 has a function of forming a set of prototypes 162 by determining the prototypes in this manner and having the set stored in prototype storage 102. A piece of information indicating to which cluster it belongs is added to each question.

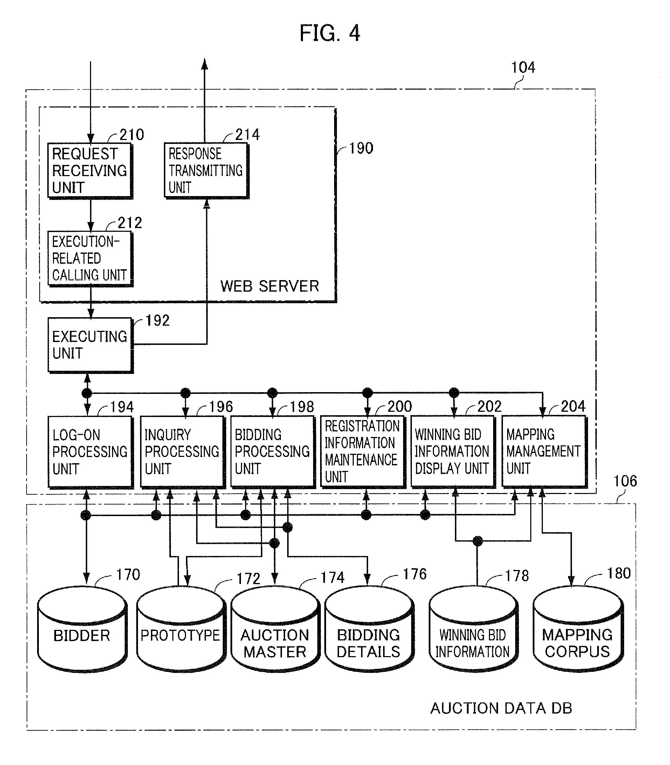

Referring to Fig. 4, auctioning unit 104 includes: a web server 190 processing a http request from a terminal of a site operator; and an executing unit 192 consisting of a program-execution module that reads and executes, in cooperation with web server 190, a program determined by a request related to the auction, among the http requests received by web server 190. Executing unit 192 is realized by computer hardware such as a CPU, not shown, executing the execution-related processing system program.

Auctioning unit 104 further includes a log-on processing unit 194, an inquiry processing unit 196, a bidding processing unit 198, a registration information maintenance unit 200, a winning bid information display unit 202 and a mapping management unit 204, called and executed in accordance with a program designation in the http request by executing unit 192, for updating various tables in auction data DB 106, reading data from various tables, and returning the results of processing to the source of http request through executing unit 192 and web server 190. These functions will be described later.

Web server 190 includes: a request receiving unit 210 for receiving the http request transmitted from a terminal of a site administrator; an execution-related calling unit 212 analyzing information included in the URL of http request received by request receiving unit 210, thereby determining which of log-on processing unit 194, inquiry processing unit 196, bidding processing unit 198, registration information maintenance unit 200, winning bid information display unit 202 and mapping management unit 204 is to be activated, and applying the information to executing unit 192; and a response transmitting unit 214 transmitting a response in the form of an html document as a result of processing transmitted from log-on processing unit 194 or the like after processing of the http request, to the terminal of site operator.

Auction data DB 106 includes: a bidder table 170 storing basic information of bidders; a prototype table 172 storing information related to prototypes; an auction master table 174 storing basic information for managing an ongoing auction; a bidding details table 176 storing details of bidding; a winning bid information table storing information related to the winning bid of auction; and a mapping corpus table 180 storing mapping rules prepared by each bidder in advance in relation to the prototype he/she bid.

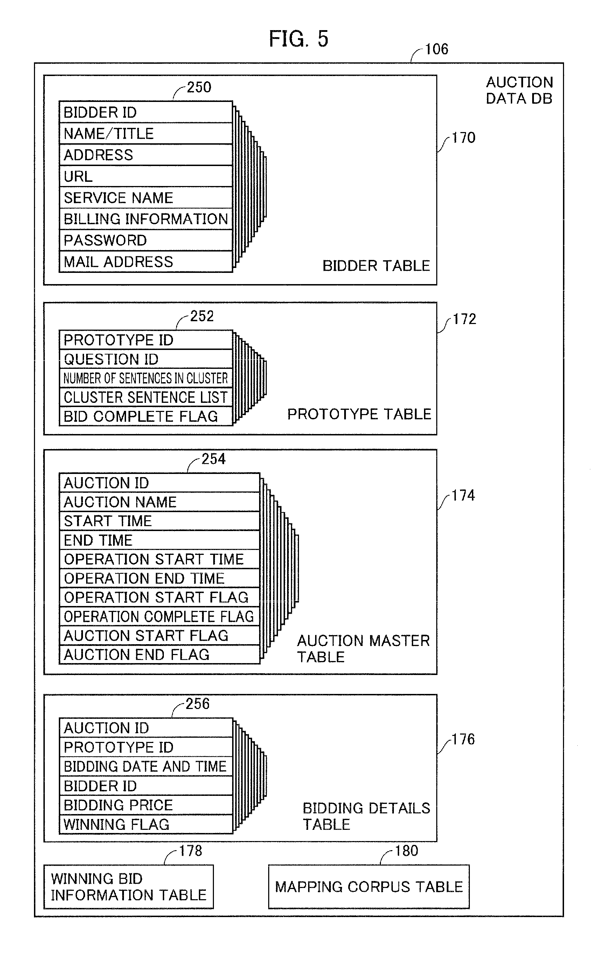

Referring to Fig. 5, by way of example, a record 250 of bidder table 170 includes: a bidder ID allocated to enable unique identification of a site operator who possibly bids for the service; a name or title of the bidder; an address of the bidder; an URL of a service site managed by the bidder and its service name; information related to billing (cutoff date, billing address etc.); a log-on password; and an e-mail address used for communication related, for example, to the result of bidding. If there is a log-on request from a site operator, the log-on information of the site operator can be verified using the bidder ID and the password stored in bidder table 170. In addition to the elements shown in Fig. 5, it is also possible to store operation director, telephone number, facsimile number and the like of the site operator. Since such pieces of information are not used in the present embodiment, description thereof will not be given with respect to Fig. 5 and in the following.

A record 252 of prototype table 172 includes: a prototype ID uniquely allocated to each prototype; an ID (question ID) in the question corpus, of the question corresponding to the prototype ID; the number of questions included in the cluster represented by the prototype; a cluster sentence list implemented by pointers to the head and tail of the list of questions belonging to the cluster; and a bid complete flag indicating whether or not the prototype has been successfully sold.

A record 254 of auction master table 174 includes: an auction ID uniquely allocated to each auction; an auction name displayed at the auction web site; start time and end time of the auction: start time and end time of operation of the specific site retrieval service based on the auction; an auction complete flag indicating whether or not bidding of auction corresponding to the record is completed; an operation complete flag indicating whether or not operation of the specific site operation service based on the result of auction is completed; and an operation start flag indicating whether or not the auction is valid (currently in operation or not). The start time and end time of auction indicate the start time and end time of a bid permitted period of site operators for each prototype. If the auction complete flag is on, it means that each of the auctioned prototypes has been successfully sold and the operation is ready. If the operation complete flag is on, it means that operation of the specific retrieval service using the result of auction has been completed. If the operation complete flag is off, it means that operation of the service using the result of auction is not yet completed. If the operation start flag is on, it means that the specific retrieval service is being operated in accordance with the result of bidding of the auction indicated by the record. If the operation start flag is off, the specific site retrieval service in accordance with the result of bidding of the auction corresponding to the record is not operated, even if the current date and time is in the period between the start time and end time of operation.

A record 256 of bidding details table 176 includes: an auction ID of the related auction; a prototype ID of the prototype as the object of bidding; time and date of bidding; a bidder ID; a bidding price; and a winning flag. The winning flag is initialized to off when the record is formed.

Again referring to Fig. 4, log-on processing unit 194 manages whether or not a site operator may log-on to the auction system, when a site operator logged-off and so on, with reference to bidder table 170. The process by log-on processing unit 194 is similar to any process that requires user registration, no matter whether it is a paid system or not.

Inquiry processing unit 196 is for executing a process, responsive to an inquiry related to an ongoing auction from a site operator logged-on to the auction system, for forming an html document representing the inquired information with reference to prototype table 172, auction master table 174 and bidding details table 176, and applying it to executing unit 192. Though data contents are different, the process of inquiry processing unit 196 can also be realized using a method similar to those commonly used by a web server that dynamically forms html documents with reference to a database.

Bidding processing unit 198 performs a process, when a bid is input from a site operator designating a specific prototype, for checking whether or not the contents of the bid are correct, and newly forming a bid details record in bidding details table 176 only when the input is correct. If the bid input is incorrect, the input is denied. Actually, the bidding process takes place after inquiry processing unit 196 makes an inquiry, as will be described later. By writing a script that guarantees integrity of the bid data in the html document formed by inquiry processing unit 196, it is presumed that the bid data received by bidding processing unit 198 is basically valid.

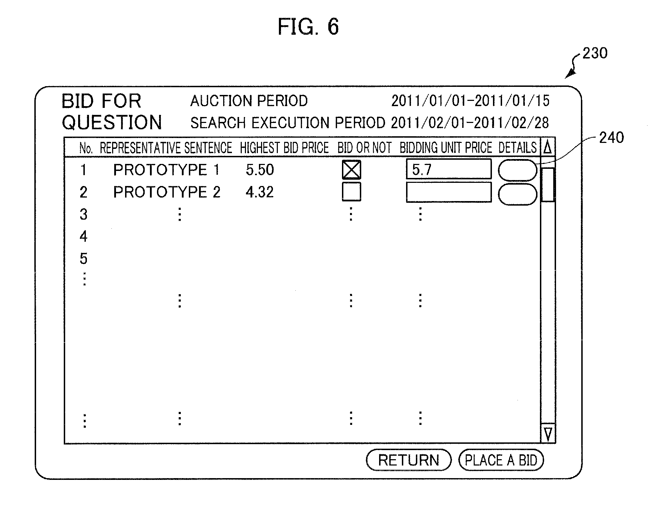

Fig. 6 shows an example of a bidding initial screen 230 displayed by inquiry processing unit 196. The screen shown in Fig. 6 is formed by inquiry processing unit 196 and displayed on a browser of the terminal of site operator, when the site operator logs on to the system and designates an auction to start the inquiry process.

Referring to Fig. 6, on the initial screen of question bidding, prototype sentences are displayed in the order of IDs. Of an already bid prototype, the highest bid is displayed on the column of "HIGHEST BID." To place a bid for a specific prototype, sentence, the site operator checks a check box on the same line as the prototype sentence as the object of bidding, among the check boxes appearing in the column of "BID," and enters a bidding price. To know the contents of prototype sentence, the number of questions included in the cluster represented by the prototype sentence and the line, one presses a "DETAILS" button 240, and details of the cluster represented by the prototype sentence are displayed, based on the corresponding record of prototype table 172, on a new window or a new tab.

When "RETURN" button displayed at the lowermost portion of bidding initial screen 230 of Fig. 6 is pressed, an auction selection screen is displayed. When "PLACE A BID" button is pressed, the user input is transmitted to bidding processing unit 198 and checked. If the checked input is valid, details of the input are added to bidding details table 176. If the checked input is found invalid, a screen similar to that shown in Fig. 6 is again displayed, with an error message. Here, by way of example, the error portion is displayed high-lighted or in red font. In the present embodiment, if there is any error, none of the inputs is added to bidding details table 176.

Registration information maintenance unit 200 is for maintaining information of the site operator stored in bidder table 170. Naturally, a site operator can maintain only the information related to himself/herself. The function of registration information maintenance unit 200 is also similar to those commonly realized by an existing system.

Winning bid information display unit 202 is for performing an inquiry process related to contents of an auction that has been already successfully sold. In the present embodiment, winning bid information display unit 202 is not related to the essential portion of the present invention and, therefore, details thereof will not be repeated here.

Mapping management unit 204 is for the bidder to input or maintain a mapping rule for processing the prototype he/she bid. The contents of processing are the same as maintenance of common database records, different only in that the object of maintenance is the mapping rule. Therefore, details of mapping management unit 204 will not be described here.

Auction management unit 108 periodically checks auction master table 174 of auction data DB 106, in response to an output of timer 110. If there is any auction of which start time is reached but its auction start flag is off, auction management unit 108 issues an instruction to updating unit 112 to start the auction, designating its auction ID. Similarly, if there is any auction of which start time of operation is reached but its operation start flag is off, auction management unit 108 has a function of instructing switching of the specific site retrieval service to updating unit 112, designating its auction ID.

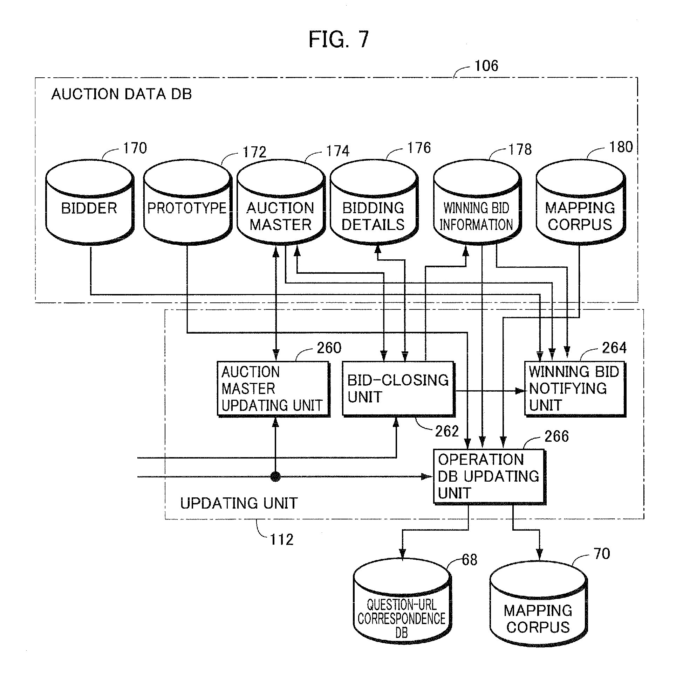

Referring to Fig. 7, the configuration of updating unit 112 will be described. Updating unit 112 includes: an auction master updating unit 260, responsive to an instruction to complete a specific auction from auction management unit 108 shown in Fig. 2, for setting the operation start flag of a record having the designated auction ID and of which auction complete flag is on, the operation start flag is off, the operation complete flag is off and the current time is between its operation start time and the operation end time; and a bid-closing unit 262, responsive to an instruction to complete a specific auction from auction management unit 108, for performing a process of inspecting bidding details table 176 and determining a winning bidder for each prototype, a process of setting the auction complete flag of the record corresponding to the designated auction in auction master table 174, when the winning bidder of each prototype of the designated auction is determined, and a process of outputting the result of bidding to winning bid information table 178.

Auction data DB 106 further includes: a winning bid notifying unit 264, responsive to completion of the bidding process by bid-closing unit 262, for notifying the result of bidding to the winning bidder of each prototype, based on the pieces of information stored in bidder table 170, auction master table 174 and winning bid information table 178; and an operation DB updating unit 266, responsive to an instruction designating an auction ID received from auction management unit 108 to switch the operation of specific site retrieval service to an operation based on the result of bidding of the auction of the corresponding auction ID, for updating contents of question-URL correspondence DB 68 and mapping corpus 70, in accordance with the winning bid information table 178 and mapping corpus table 180.

Specifically, operation DB updating unit 266 sets the operation complete flag of the record of which operation start flag is on and operation complete flag is off, of the auction master table 174, when it receives an instruction to switch operation from auction management unit 108. Operation DB updating unit 266 further executes a process of setting the operation start flag of the record having the auction ID designated by auction management unit 108 and of which auction complete flag is on, operation start flag is off and operation complete flag is also off. In addition, operation DB updating unit 266 overwrites question-URL correspondence DB 68 in accordance with the result of bidding based on winning bid information table 178, and overwrites mapping corpus 70 by extracting only the mapping rules prepared by the winning bidder for each prototype, among the mapping rules recorded in mapping corpus table 180.

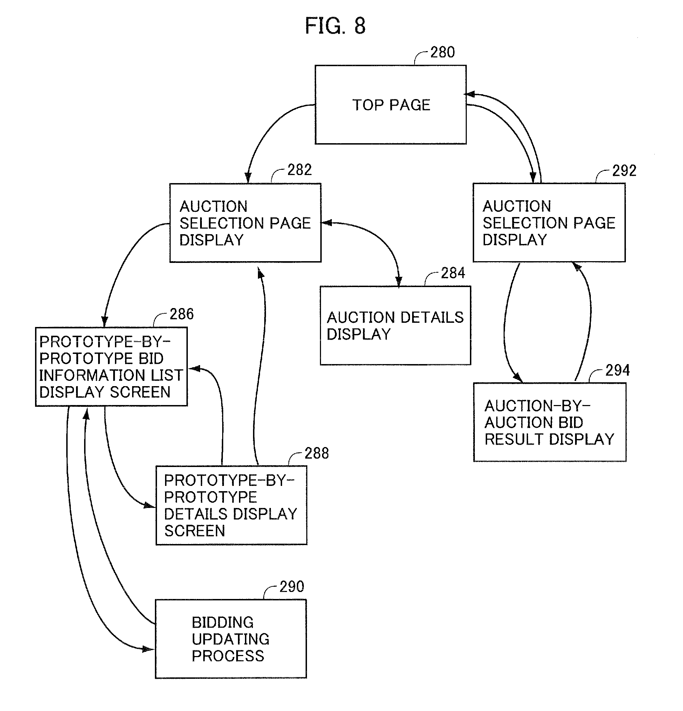

Referring to Fig. 8, a screen on the terminal of site operator who participates in the auction by information retrieval service system 40 in accordance with the present embodiment makes transitions to various states, depending on situations. When the site operator connects to the site where the auction is taking place and successfully logs on, a top page 280 is displayed. Though not shown, on the top page 280 are shown two options: participation to the auction, and inquiry of bidding result. If participation to the auction is selected, the screen makes a transition to an auction selection page 282. When the inquiry of bidding result is selected, the screen makes a transition to an auction selection page 292. Though their names are both auction selection pages, page 282 is for selecting a currently ongoing auction, while page 292 is for selecting an auction that has already been bid and closed.

Though not shown, on auction selection page 282, a list of auctions that are currently opened is displayed. This screen can be formed by referring to auction master table 174. On this screen, an option for selecting detailed display of each auction and an option for selecting display of a list of prototypes included in each auction are displayed. If detailed display of each auction is selected, the screen makes a transition to an auction details information display 284. If display of prototype list is selected, a prototype-by-prototype bid information list display 286 is displayed.

On auction details information display 284, the record of designated auction ID is read from auction master table 174, and details thereof are displayed. If a "RETURN" button on this screen is pressed, the screen returns to auction selection page 282.

Prototype-by-prototype bid information list display 286 corresponds to bidding initial screen 230 of Fig. 6. When "DETAILS" button 240 shown in Fig. 6 is pressed, the screen makes a transition to a prototype-by-prototype details display 288 displaying details related to the corresponding prototype. Though not shown, on prototype-by-prototype details display 288, a "RETURN" button and a "RETURN TO AUCTION SELECTION PAGE" button are displayed. When these buttons are pressed, the screen makes a transition to prototype-by-prototype bid information list display 286 and to auction selection page 282, respectively.

When "PLACE A BID" button on prototype-by-prototype bid information list display 286 shown in Fig. 6 is pressed, the contents of bidding are checked by bidding processing unit 198, as described above. If the contents of bidding are valid, bidding updating process 290 is executed, and in accordance with the information after bidding, prototype-by-prototype bid information list display 286 is updated. If the contents of bidding are invalid, prototype-by-prototype bid information list display 286 at the time of input is again displayed, together with an error message.

### <Program Configuration>

### - Bid-Closing Process -

Each of the processing units shown in Fig. 4 may be easily realized by diverting existing techniques. In the following, a control structure of a program realizing bid-closing unit 262 and winning bid notifying unit 264 shown in Fig. 7 will be described. Here, description will be given assuming that an auction ID is designated and data of a specific auction ID is successfully bid.

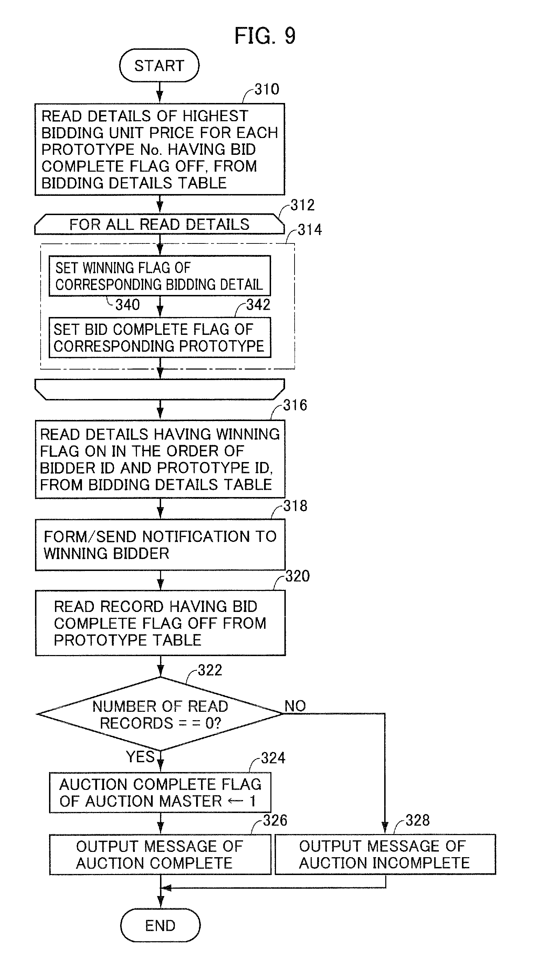

Referring to Fig. 9, the bidding processing program includes: a step 310 of reading bidding details of the highest bidding price for each prototype number having the designated auction ID and of which bid complete flag is off, from bidding details table 176; and a step 312 of repeating the following step 314, for all the details read at step 310.

Step 314 includes: a step 340 of setting the winning flag of the bid details as the object of processing; and a step 342 of setting the bid complete flag of the record having the same prototype ID as the prototype ID of the bid details on prototype table 172.

The program further includes: a step 316, executed following step 312, of reading details of which winning flag is on, from bidding details table 176 in the order of bidder ID and the order of prototype; a step 318 of forming and sending an e-mail as a notice of bidding result to the winning bidder; a step 320 of reading all records having the designated auction ID and of which bidding complete flag is off, from prototype table 172; and a step 322 of determining whether the number of records read at step 320 is 0 or not and branching the flow of control in accordance with the result of determination.

If the determination at step 322 is positive, it means that all prototypes have been successfully sold, and the control proceeds to step 324. At step 324. the auction complete flag of the record of designated auction ID on auction master table 174 is set to 1. Thereafter, a message of auction complete is output to a system output at step 326, and the process ends.

If the determination at step 322 is negative, it means that unsold prototype or prototypes are left. At step 328, a message of auction incomplete is output to the system output, and the process ends. In this case, the system administrator may hold another auction only for the unsold prototypes. If any protocol remains unsold even after a number of auctions, the auction itself may be terminated, and if a search request similar to the question of the cluster represented by such a prototype is received, the search request may be directly transferred to a general search site without carrying out the process of issuing the query to a specific site and the obtained search result may be returned to the user who transmitted the search request.

### [Program Structure]

The control structure of a program realizing the specific site retrieval service will be described. The process described in the following corresponds to the process that takes place following question-analyzing unit 130 of URL searching unit 134 shown in Fig. 2. Therefore, this program is activated in response to reception of a string of morphemes after parsing, of the text string of search request.

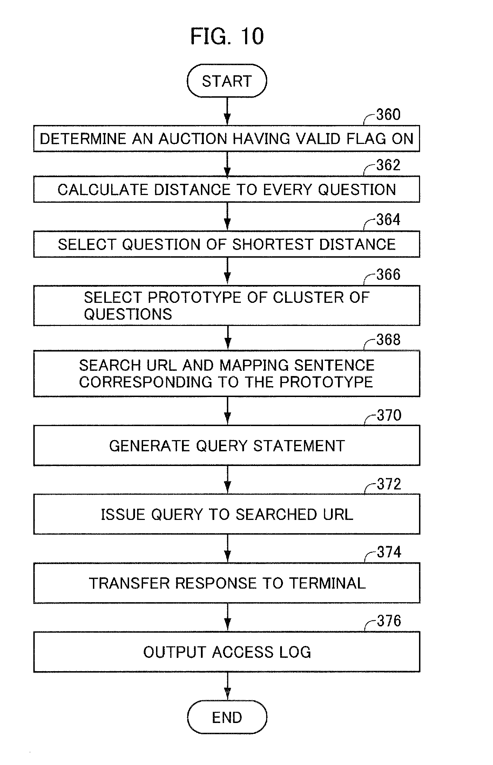

Referring to Fig. 10, the program includes: a step 360 of determining an auction that is currently operated, by searching a record having its valid flag on, on auction master table 174; a step 362 of calculating a distance between the string of morphemes of received search request and every question stored in corpus storage device 64; a step 364 of selecting, in response to the result of processing at step 362, a question of which distance to the search request is the shortest; a step 366 of selecting the prototype of the cluster to which the question selected by the process of step 364 belongs; and a step 368 of retrieving the URL related to the question selected at step 364 or related to the prototype selected at step 366 from question-URL correspondence DB 68 and retrieving a mapping corpus related to the retrieved URL from mapping corpus 70, respectively. In the present embodiment, if the URL corresponding to the question is stored in question-URL correspondence DB 68, the URL is used, and otherwise, a URL that corresponds to the prototype selected at step 366 is used. It is assumed as a premise that in mapping corpus 70, a mapping rule for forming a query statement corresponding to the URL stored in question-URL correspondence DB 68 is stored.

The program further includes: a step 370, following step 368, of replacing the keyword portion in the mapping rule with a corresponding word in the search request and thereby generating a query statement, using the URL and the mapping rule retrieved at steps 366 and 368 as well as the parsed search request received from question-analyzing unit 130; a step 372 of combining the query statement and the URL retrieved at step 368 and thereby transmitting (issuing) the query request over the Internet: a step 374 of receiving a response to the query request issued at step 372 and transferring it to the terminal that has transmitted the first search request; and a step 376 of outputting an access log including information necessary for billing with respect to the series of operations described above, and ending the process. In the present embodiment, execution of the program shown in Fig. 10 starts every time a search request is received, and the execution ends when a response is returned.

### <operation>

Information retrieval service system 40 having the above-described configuration operates in the following manner. The operation of system 30 including information retrieval service system 40 is roughly divided into three phases with regard to one auction. The first phase is an auction preparation phase. The second phase is an auction phase. The third phase is an operation phase of the specific site retrieval service based on the result of auction. These will be described in order in the following.

### - Auction Preparation Phase -

Before starting an auction, pieces of information necessary for holding the auction are stored in bidder table 170 and auction master table 174. With bidder table 170, a site operator who wants to entice a user through the service of information retrieval service system 40 registers information of itself through the web, not in an auction-by-auction manner. With auction master table 174, an operator of information retrieval service system 40 registers pieces of information necessary to manage the auction, in the auction-by-auction manner.

Prototype table 172, bidding details table 176, winning bid information table 178 and mapping corpus table 180 are cleared before the start of the auction.

The operator of information retrieval service system 40 collects a large number of questions from the Internet in advance, and have these sentences stored as a corpus in corpus storage device 64. A unique question ID is allocated to each question to identify each other. Clustering unit 100 classifies the questions included in the corpus into a prescribed number of clusters, and determines a prototype sentence for each cluster. A cluster number is allocated to the cluster. The determined prototype sentence is stored with the cluster number of the corresponding cluster and the question ID of the prototype, in prototype storage 102. Information for accessing these prototypes is stored in prototype table 172 shown in Fig. 4. In the present embodiment, a prototype ID, which is separate from its question ID, is allocated to each prototype.

### - Auction Phase -

When an auction is ready, information retrieval service system 40 notifies a plurality of site operators 46 of the start of auction through some medium. Then, it follows that any interested site operator will consult about the contents of the auction. This will be handled by inquiry processing unit 196.

Inquiry processing unit 196 controls screens displayed on the terminal of site operator 46 in accordance with the transition diagram shown in Fig. 8. Assume that the site operator operates, of the screens shown in Fig. 8, prototype-by-prototype bid information list display 286 (Fig. 6) to place a bid. Then, the contents of input are checked by bidding processing unit 198. If the contents ofbidding are valid, bidding updating process 290 is executed, and details of the bid are added to bidding details table 176. Further, in accordance with information after bidding, prototype-by-prototype bid information list display 286 is updated. If the contents of bid are invalid, the prototype-by-prototype bid information list display 286 displayed at the time of input is again displayed together with an error message.

The auction is not started until the auction start time stored in auction master table 174 is reached. Further, it ends when the end time stored in auction master table 174 is reached. The screen of Fig. 6 is not displayed before or after the duration of auction and, hence, bidding is impossible. If any bid happens to be placed in such a time period by some reason, the bid is rejected since the contents of bidding are regarded as an error.

In this manner, bidding details from a plurality of site operators 46 are stored in bidding details table 176. In this bidding process, unless a better price than the current price is bid, the bid is rejected as invalid. The process for bidding the prototype in accordance with the present embodiment can be realized by simply diverting common auction techniques.

The site operator who participates in the auction can add a mapping rule for forming a query statement for the prototype he/she bid, to mapping corpus table 180. Each mapping rule is stored in mapping corpus table 180 in association with the bidder ID and the prototype ID of the bid prototype sentence.

Regarding the ongoing auction, when the end time of a record of interest in auction master table 174 is reached, bid-closing unit 262 starts the bid-closing process.

In the bid-closing process, the bid-closing unit 262 extracts the bidding detail of highest price for each prototype, from winning bid information table 178 (step 310 of Fig. 9). For all the extracted details, the winning flag of the record corresponding to the detail in bidding details table 176 is set (step 340), and the bid complete flag of the record corresponding to the prototype ID of the detail is updated to on, in prototype table 172 (step 342).

When the processes of steps 340 and 342 are completed for all bidding details extracted at step 310, details of which winning flag is on are read again from bidding details table 176, in the order of bidder ID and prototype ID (step 316). The bidder indicated by the bidder ID of these records represents the winning bidder of each prototype. At step 318, a mail notifying about the contents of winning bid is generated and sent to each winning bidder. At this time, the record of winning bid contents is added to winning bid information table 178.

Thereafter, a record or records having the corresponding auction ID and of which bid complete flag is off is read from prototype table 172 (step 320), and determination is made as to whether the number of such records is 0. If the number is 0, it means that bidding is completed for all prototypes. Therefore, the auction complete flag of the auction master is set (step 324), an auction complete message is output to the system output, and the process ends. If the number of records read at step 320 is not 0, it means that there is a prototype sentence for which valid bid was not placed. Here, an auction incomplete message and information specifying such a prototype sentence or sentences are output to the system output (step 328), and the process ends.

If the auction is incomplete, the auction administrator may hold bidding again for any prototype that has not been successfully sold. If all prototypes are successfully bid, there is no problem. If one or more prototypes are left unsold to the end, specific pieces of information are added to these prototypes and to the questions belonging to the clusters of these prototypes. The process that takes place when a search request closer to such a question is received will be described later.

When the bid-closing process is completed, the winning bid information is held in winning bid information table 178.

### - Operation Phase -

Auction management unit 108 shown in Fig. 2 constantly checks contents of auction data DB 106 based on an output of timer 110, and determines whether there is any auction that reached the auction start time and has the auction start flag and the auction complete flag both on and the operation start flag and the operation complete flag both off. If there is such an auction, auction management unit 108 issues an instruction to switch operation of the auction to auction master updating unit 260 and operation DB updating unit 266, with regard to the auction.

Receiving this instruction, auction master updating unit 260 sets the operation start flag of corresponding record 254 of auction master table 174.

Receiving this instruction, operation DB updating unit 266 updates the contents of question-URL correspondence DB 68 and mapping corpus 70, based on the contents stored in winning bid information table 178. Specifically, the URL is read from a record of bidder table 170 of the site operator who bid for each prototype, and each question belonging to the cluster of the prototype and the read URL are stored in association with each other in question-URL correspondence DB 68. It is possible to store simply the information representing the relation between the prototype ID and the URL in question-URL correspondence DB 68. By doing so, the capacity of question-URL correspondence DB can be made smaller. It is noted, however, that in this case, when a search request is received, the responsiveness would be impaired to some extent, since the URL can be read from question-URL correspondence DB 68 only after specifying the question having the shortest distance to the search request and thereafter specifying the prototype of the cluster to which the question belongs.

Operation DB updating unit 266 further selects, from among the mapping rules stored in association with respective questions in mapping corpus table 180 for each prototype, only the rules provided by the winning bidder of the prototype, and transfers to mapping corpus 70.

In the present embodiment, the transfer is done at the time of operation switching and, therefore, it is possible for the winning bidder to add a mapping rule after successful bidding before the start of operation. Such a process, however, may be inhibited. In such a case, the transfer from mapping corpus table 180 to mapping corpus 70 may be done at the time of bid-closing of the auction.

When the operation starts, information retrieval service system 40 operates in the following manner. In the present embodiment, it is assumed that terminal 44 is a portable telephone. The user of terminal 44 accesses a web page for using the service of information retrieval service system 40, and inputs a search request by voice. On terminal 44, the input voice is encoded using a codebook in the similar manner as a process in a common portable telephone, and transmitted to code receiving unit 80 of information retrieval service system 40.

Code receiving unit 80 recovers the original voice data from a series of received codes using the codebook, and applies the result to feature calculating unit 82. Feature calculating unit 82 frames the voice data, calculates prescribed acoustic features for each frame, and applies the result to voice recognition device 84. Voice recognition device 84 operates as a common voice recognition device, and generates text data corresponding to the search request and applies it to question-analyzing unit 130.

Receiving the text data of search request, question-analyzing unit 130 performs morphological analysis, parsing, semantic analysis and the like on the sentence represented by the data (which is assumed to be Japanese here) and thereby generates a string of morphemes, which is applied to question-searching unit 132. As a result of processing by question-analyzing unit 130, each morpheme comes to have pieces of information necessary for question search, as tags such as part-of-speech tag and hierarchical semantic tag.

Question-searching unit 132 calculates the distance between each question stored in corpus storage device 64 and the string of morphemes of search request applied from question-analyzing unit 130, specifies a question of which distance to the search request is the shortest, and applies the question and the search request to URL searching unit 134.

Based on the applied question ID, URL searching unit 134 reads the corresponding URL from question-URL correspondence DB 68. Query generating unit 136 reads the mapping rule stored in mapping corpus 70 corresponding to the question or the prototype sentence. Further, query generating unit 136 generates a query based on the search request, URL and the mapping rule, and applies it to query issuing unit 138. Query issuing unit 138 transmits the query over the Internet, and the query is transmitted to service site 42 that is designated by the URL.

Since the query is based on the mapping rule prepared in advance, a response (HTML document) corresponding to the query is generated with high accuracy at service site 42, and returned to query issuing unit 138. Query issuing unit 138 applies the received HTML document to query-result transmitting unit 140.

Query-result transmitting unit 140 transfers the HTML document applied from query issuing unit 138 to service using terminal 48. Here, it is desired that the transferred HTML document is displayed on service using terminal 48 as if it were directly returned from service site 42 to service using terminal 48. Such a process can be realized by, for example, using redirection. Query-result transmitting unit 140 saves, every time it transmits the query-result, the contents thereof as search log, in search log storage unit 150. As the search log, pieces of information sufficient to enable billing to each winning bidder may be stored. If statistical information obtained from the search log is to be provided to the winning bidder, it is desired to store pieces of information that serves such a purpose.

After one billing period passes, billing unit 152 extracts search logs of searches that took place in the billing period, from search log storage unit 150. Further, based on the extracted search logs, billing unit 152 identifies, from the prototype ID used at the time of searching, the winning bidder and the winning price of the prototype, calculates total amount for each winning bidder, and sends a bill together with basic data for calculation of charged amount obtained from the search logs. When this process for every winning bidder ends, a step of completing the billing process is executed.

As described above, in the present embodiment, it is possible to hold auction substantially individually for a large number of questions forming a question corpus. Assume that a bidder successfully bids a question, and an information request similar to the question is issued. Then, the winning bidder can exclusively perform the process of returning the information from his/her site or from any site related to him/her as the response to the information request, to the terminal of the user who issued the request. For the winning bidder, this is advantageous since he/she can seize the chance to have the service provided by his/her site used efficiently.

From the viewpoint of a user who requests information, it is possible to immediately access a service provided by the site operated by the winning bidder of a question that is similar to the question input for information retrieval, rather than the conventional style of searching information once on a search site and then selecting a piece of necessary information from among the presented list. Since questions are sold by successful bidding to different site operators depending on the attributes of keywords included in the questions, it becomes possible to directly obtain information of the site of the site operator providing appropriate service, for each search request for information. Thus, the trouble of selecting a piece of information from the list of search results can be eliminated.

### [Second Embodiment]

### <Configuration>

In the first embodiment described above, it is assumed as a precondition that the questions are classified to a plurality of clusters that do not overlap with each other. The system formed in this manner can have a simple structure.

For an auction, however, it may become necessary to allow for multilayered classification, rather than the classification of questions in accordance with attributes assuming mutually exclusive values. For example, in place of a bid for only a designated prototype, a search request may be guided to a specific site based not only on the prototype sentence but also on the attribute of the information search request. By way of example, assume that the word "restaurant" is selected as the attribute without designating any region, and that the word "restaurant" is selected as the attribute, designating a specific region (such as Osaka city, Kyoto city, Paris, Washington D. C.), for a search request related to an eating place. Here, the selected region of one request encompasses the selected region of the other. If one bidder bids without designating any region and another bidder bids designating only a specific region, these bidders compete against each other for the specific region, but not compete in other regions. It is preferable to successfully hold an auction in some form with these bidders and to maximize benefits to the operator of specific site retrieval service.

The present embodiment enables an auction in such a form. For this purpose, according to the present embodiment, an attribute tree, having a similar tree from as a semantic dictionary, is prepared beforehand, and the inclusion relation between attributes is examined using the tree. If two values having inclusion relation are designated with respect to an attribute of the same type and two or more bids having the same conditions other than the price are placed, it is determined that the range of attribute of the value at a lower position of the attribute tree of the type will be sold to the bidder who placed the highest price, and that the range of attribute of the value at a higher position of the attribute tree is sold to the bidder who placed the bid designating that value.

By way of example, if the bidding price of a bidder designating an attribute value of lower position is higher than the bidding price of a bidder designating an attribute value of higher position, the range is sold to the bidder who designated the lower position value. The bidder who designated the attribute value of upper position wins the portion designated by the value except for the range defined by the value of lower position. If the bidding price of the bidder designating the attribute value of higher position is higher than the bidding price of the bidder designating the attribute value of lower position, all the range defined by the attribute value is sold to the bidder who designated the value of upper position.

By this approach, it becomes possible for a site operator having his/her business limited to a specific area to advantageously operate his/her business by successfully bidding the limited area by placing a relatively high price. It is possible to save cost than bidding with a designation of wider range. On the other hand, a site operator whose business covers wider area will have a chance to successfully bid the wider area with relatively low bidding price. Further, he/she may concede the competing range to a bidder placing higher bidding price, or he/she may bid with higher price for the competing range. For the site operators participating in the auction, it is possible to bid in accordance with the business strategy aimed at the target range. Therefore, a more exciting auction becomes likely.

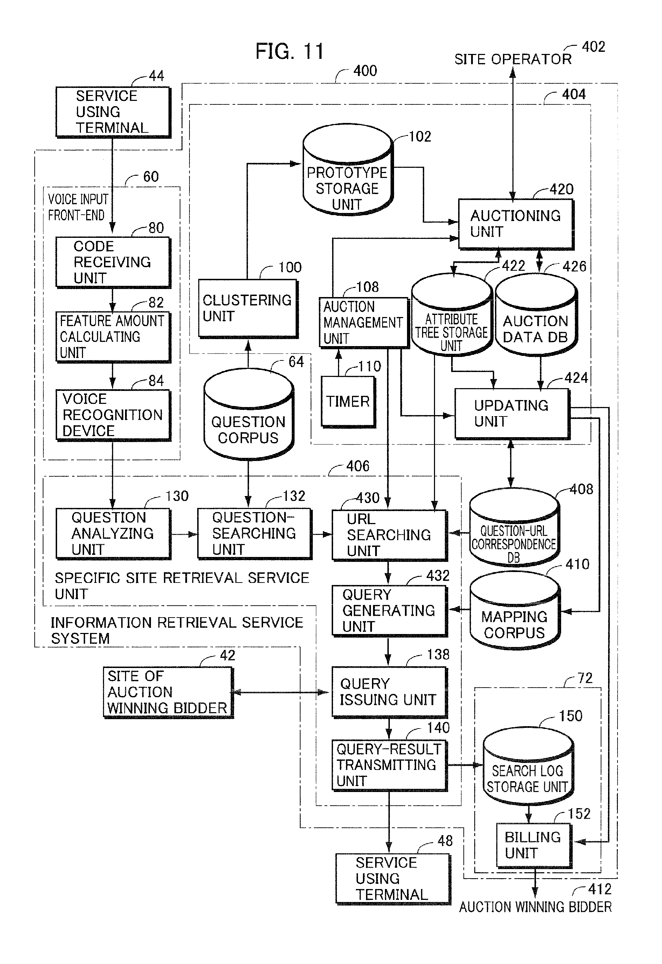

Fig. 11 shows a schematic configuration of information retrieval service system 400 in accordance with the second embodiment. Information retrieval service system 400 shown in Fig. 11 may be used in place of information retrieval service system 40 shown in Fig. 2.

Information retrieval service system 400 shown in Fig. 11 is different from information retrieval service system 40 in that it includes an auction system 404 that allows an auction with multi-layered attribute values as described above in place of auction system 62, and that it includes a specific site retrieval service unit 406 having a function of guiding an information search request to an appropriate service site 42 in accordance with the result of winning bid of such a multi-layered auction, in place of specific site retrieval service unit 66.

Though auction system 404 has a configuration similar to that of auction system 62, it is different from auction system 62 shown in Fig. 2 in the following points: it newly includes an attribute tree storage unit 422 for storing the attribute tree described above; it includes an auction data DB 426, corresponding to auction data DB 106 shown in Fig. 2, for storing data related to the auction used in auction system 62 and modified to have data format allowing for multi-layered classification; and it includes an auctioning unit 420 and an updating unit 424, for executing the auction process and the process of switching the specific site retrieval service, respectively, allowing for multi-layered classification. Auctioning unit 420 shown in Fig. 11 corresponds to auctioning unit 104 shown in Fig. 2, and updating unit 424 corresponds to updating unit 112 shown in Fig. 2, respectively.

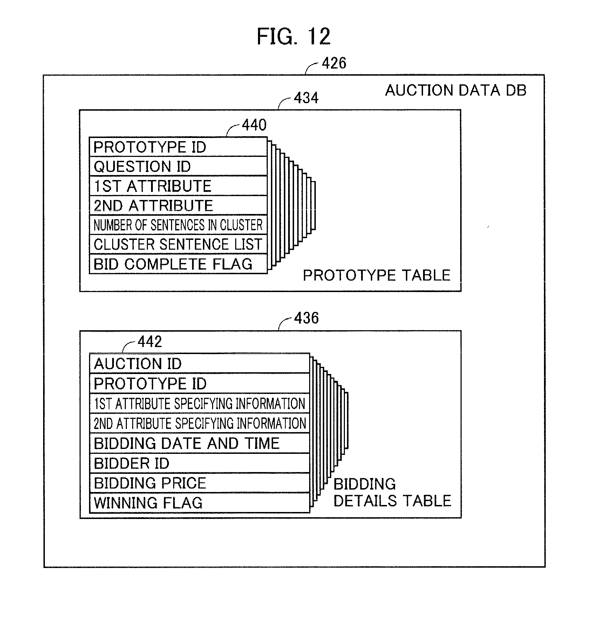

Auction data DB 426 includes, similar to auction data DB 106, a bidder table, a prototype table, an auction master table, a bidding details table, a winning bid information table and a mapping corpus table. Fig. 12 shows configurations of a record 440 of prototype table 434 and a record 442 of bidding details table 436. In Fig. 12, tables other than prototype table 434 and bidding details table 436 are not shown, for simplicity of the drawing.

Record 440 in prototype table 434 has, in addition to record 252 (see Fig. 5) of prototype table 172 of the first embodiment, two fields for holding first and second attribute values. Record 442 of bidding details table 436 has, in addition to record 256 of bidding details table 176 of the first embodiment, first and second attribute specifying information fields storing attribute values selected respectively for the attributes of a prototype sentence by the bidder at the time of bidding.

### [Screen Configuration and Screen Transition]

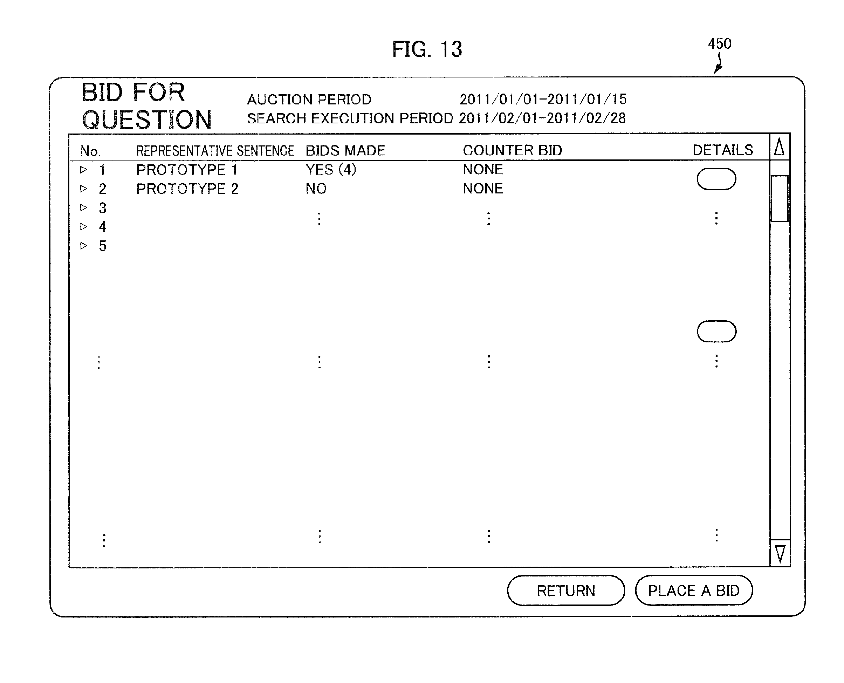

Referring to Fig. 13, on a bidding initial screen 450 when a bidder makes an inquiry at the time of bidding for a question in an auction operated by information retrieval service system in accordance with the second embodiment, prototype sentences and simple information related to bidding therefor are displayed as details lines in the order of prototype ID.

Each detail line includes a right-pointing triangle for displaying details of a bid for the prototype sentence, a number ("No." column) allocated to the prototype, the prototype sentence ("REPRESENTATIVE SENTENCE" column), the number of bids for the prototype sentence ("BIDS MADE" column), information as to whether the user having this screen displayed has placed a bid for the prototype sentence ("COUNTER BID" column), and a details button for displaying details of the prototype (contents of record 440 of prototype table 434 shown in Fig. 12).

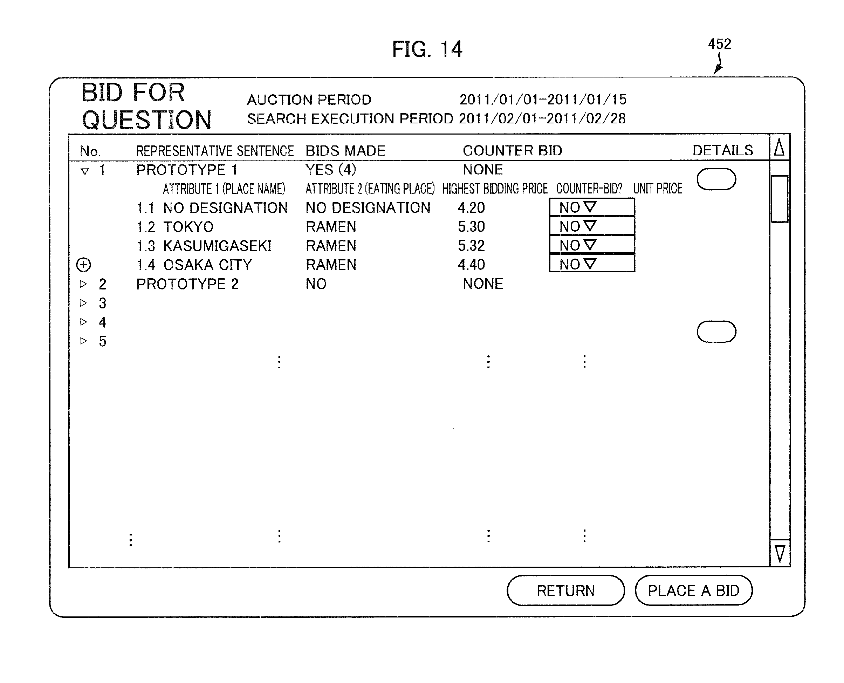

When the user clicks the right-pointing triangle at the left end of each detail line, contents of the bids corresponding to the detail are displayed. The screen displayed at this time is as shown in Fig. 14. The transition of screens as will be described in the following can be realized by appropriately combining the screen transition caused by the process executed on the client side only and the screen transition caused by transmission of input data from the client to the server and returning of screen data generated by the process on the server side to the client each time.

The screen shown in Fig. 14 appears when the user clicks the right-pointing triangle of the prototype having the number No. = 1. The right-pointing triangle at the left end of prototype No. 1 changes to a downward-pointing triangle, and the contents of bids are shown as a drop-down view. In the example shown in Fig. 14, there are four bids placed for the prototype No. = 1. These bids are displayed as separate bidding detail lines.

The prototype has two fields for applying two attributes. In this example, the first attribute is the "PLACE NAME" and the second attribute is "EATING PLACE." Specifically, the prototype sentence has two keywords having attributes added.

Each displayed bidding detail line indicates only the bidding detail that can possibly be successfully bid, among the bidding details. In this example, at present, four users may possibly bid successfully.

Each displayed bidding detail line includes the number (such as "1.1") allocated to the displayed bidding detail, values designated by the bidder for the first and second attributes of the prototype ("FIRST ATTRIBUTE NAME" column and "SECOND ATTRIBUTE NAME" column), and the bidding price ("HIGHEST BIDDING PRICE" column). Different bidders may successfully bid, if they designate different attribute values. If there are competing bidders, only the contents of bids placing possibly successful bidding prices are displayed here.

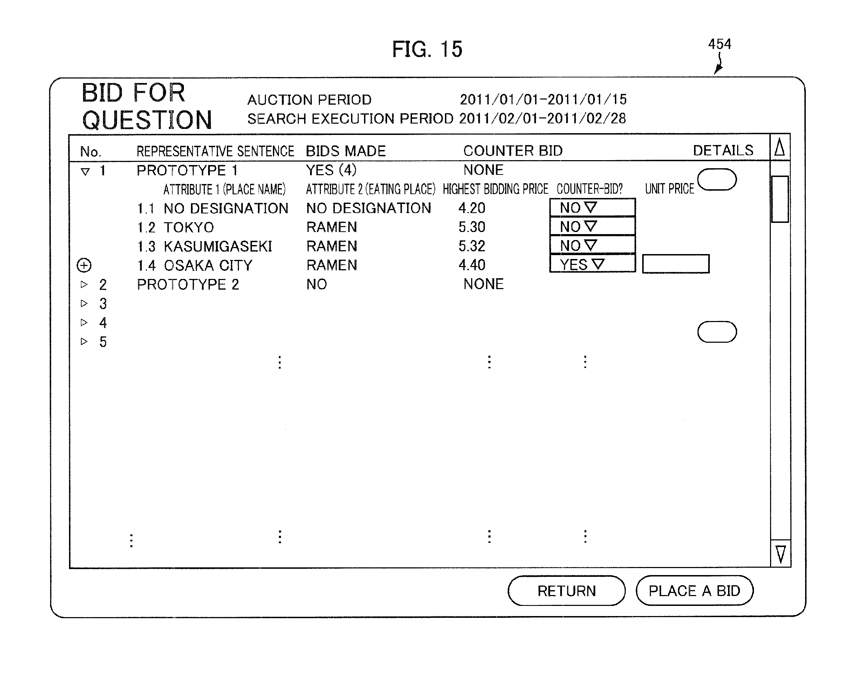

Each displayed bidding detail line further includes a "COUNTER BID" column for designating whether the user currently operating this screen makes a bid under the same conditions as the bidding detail except for the bidding price, and a "BIDDING PRICE" column for entering the bidding price if he/she makes a bid. On the "COUNTER BID" column, a pull-down menu is displayed, which is set to a default setting of "NO" (no counter bidding). If "YES" is selected from the pull-down menu, input of "bidding price" becomes possible. The display corresponding to this situation is represented, for example, by the fourth bidding detail line for the first prototype in the screen 454 of Fig. 15. If a bid is placed for any of the bidding detail and "PLACE A BID" button is pressed, the contents of bidding are transmitted to the server, and the bidding details are added.

In the present embodiment, bidding is permitted only when the bidding price is higher than the highest bidding price placed by that time. As to the attribute, if a bid is placed for the same attribute with a higher price, the bidding detail that has been displayed by that time is erased from the screen. If there has been a bid designating a certain value for an attribute and a certain bidding price and another bid is made designating, a value of narrower range for the attribute and a higher bidding price, the new bid is added and the existing bidding detail is also maintained. The reason for this is that for the portion other than the range designated by the new bid, the detail of the bid placed with the highest price beforehand is considered valid. As to what range is designated by the attribute, determination is made using the attribute tree, as will be described later.

Referring to Fig. 14, the first bid for the first prototype does not designate the first attribute (place name) or the second attribute, and places the bidding price of ¥4.2. The second bid designates "Tokyo" as the place name, designates "ramen" as the eating place, and ¥5.3 as the bidding price. The second bid is made later than the first bid, and it designates a narrower range with higher bidding price than the first bid. Therefore, the second bid is added and the first bid is left, as it designates the range other than the range designated by the second bid.

The third bid designates "Kasumigaseki" as the place name, designates "ramen" as the eating place, and ¥5.32 as the bidding price. This bid is also valid, since it designates a narrower range with higher bidding price than the second bid. At the same time, since the second bid is still valid for the portions designating "ramen" in the area other than "Kasumigaseki," the second bid is still maintained.

The fourth bid designates "Osaka" as the place name, designates "ramen" as the eating place, and ¥4.40 as the bidding price. Though this bid partially compete with the first bid, it does not compete with the second and third bids. The range determined by the designated attribute of this bid is narrower than the first bid. Therefore, this bid is also valid.

From the foregoing, the first bid for the first prototype sentence is still valid in this state. It is noted, however, that for the eating place type of ramen, the valid range is the entire range of place names except for Tokyo and Osaka, and for the eating place type other than ramen, the valid range is the entire range of place names. The second bid remains valid for the eating place type of ramen and for the place name of Tokyo, except for Kasumigaseki.

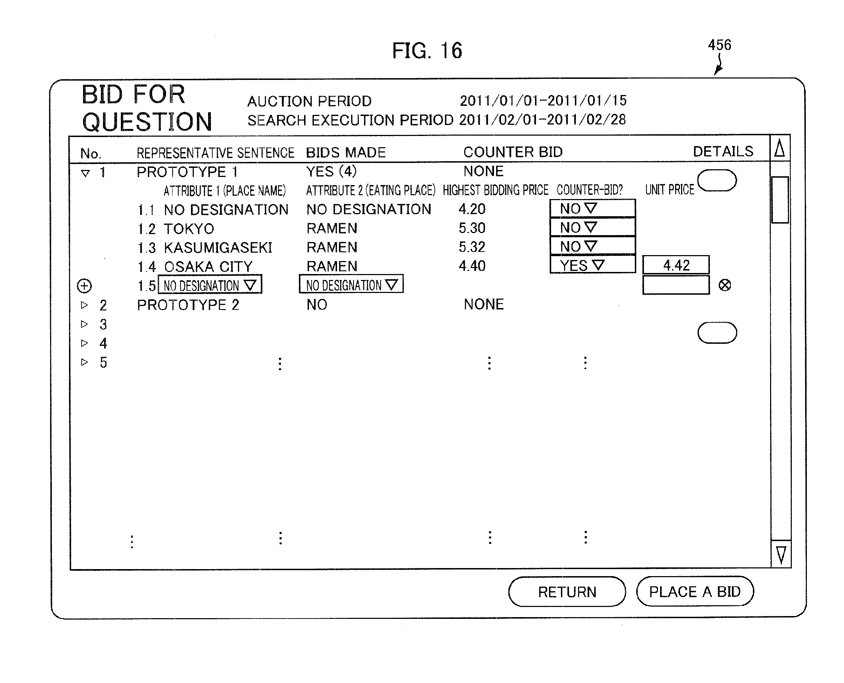

In the example shown in Fig. 14, a plus mark (+) is displayed at the left end of the fourth bidding detail line (last bidding detail line) for the first prototype. When the plus mark is clicked, a new bidding detail line is displayed on the screen, allowing the user to place a new bid designating the two attributes and a bidding price, for the prototype sentence. The display corresponding to this situation is represented, for example, by the fifth bidding detail line for the first prototype in the screen 456 of Fig. 16.

In the present embodiment, it is assumed as preconditions that the types and values of attributes that can be designated are limited to those prepared in the form of the attribute tree. Therefore, it follows that at the time of inputting a new bid, only the possible options are displayed on a pull-down menu and the user selects a desired one.

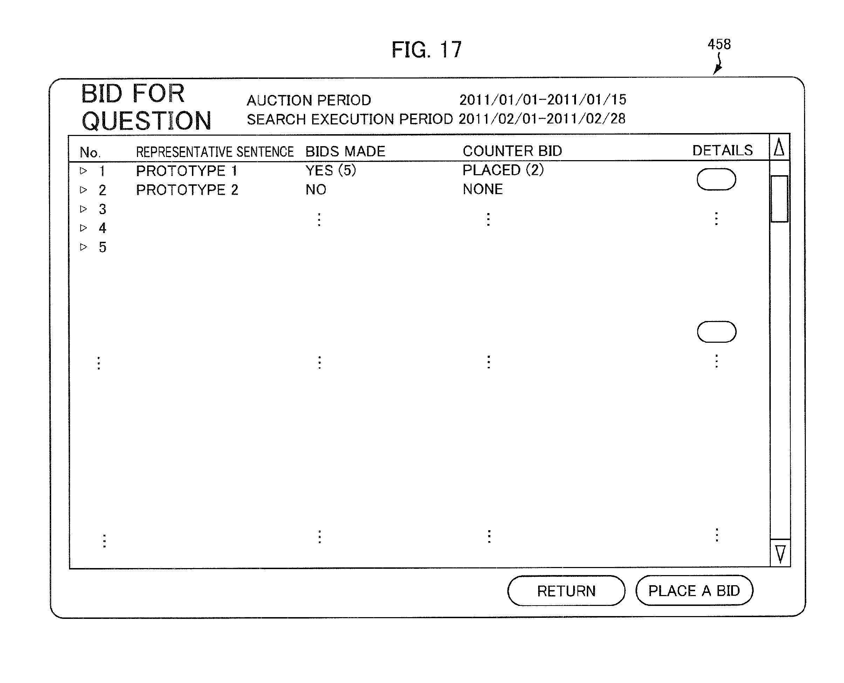

By way of example, if "PLACE A BID" button is pressed after designating the bidding price in the state shown in Fig. 16, the bidding information is transmitted to the server, and a screen 458 showing the result of processing is displayed as shown in Fig. 17. In this example, the user adds a bid for the first prototype designating a new attribute, and further places a bid with higher bidding price for the fourth bidding detail line. As a result, a total of five bids are placed for the first prototype, of which two are placed by the present user. Thus, the displays corresponding to the contents can be seen in the columns "BIDS MADE" as "(5) BIDS" and "COUNTER BID" as (2) BIDS."

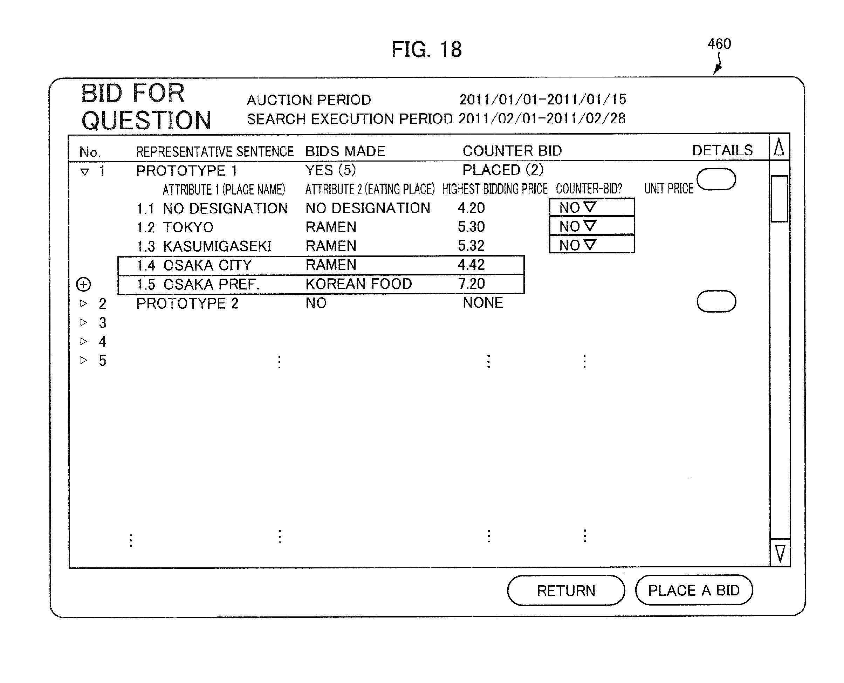

If the right-pointed triangle at the left end of the detail line for the first prototype is clicked on the screen 458 shown in Fig. 17, the screen 460 of the bidding detail line corresponding to the first prototype similar to Fig. 14 is displayed as shown in Fig. 18. In this example, however, there are two bids placed by the user who is operating the terminal. Therefore, these bids are shown in an emphasized manner on the screen, distinguished from other bids. For example, these may be displayed in a different font color or background color, highlighted, or a specific mark may be added to the bidding detail lines.

### [Attribute Tree]

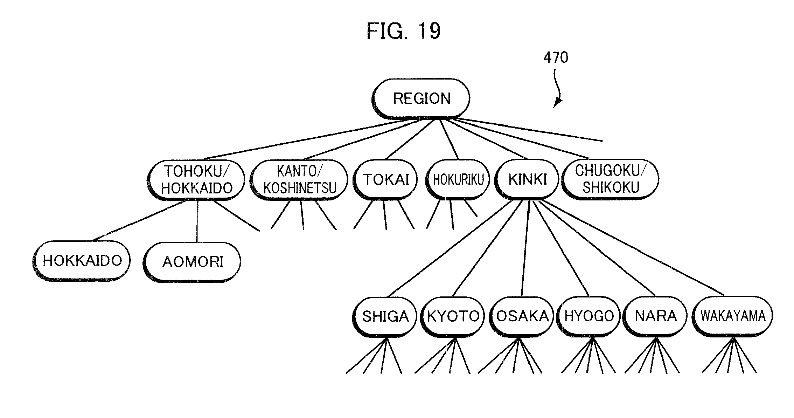

Referring to Fig. 19, an attribute tree 470 stored in attribute tree storage unit 422 of Fig. 11 is prepared in advance, for each attribute. Attribute tree 470 shown in Fig. 19 is related to the regions. In this example, attribute tree 470 includes: a root node representing Japan; nodes of the first layer dividing Japan into Tohoku/Hokkaido, Kanto/Koshinetsu, Tokai, Nokuriku etc.; nodes of the second layer branching from each of the nodes of the first layer, dividing the region represented by the node into smaller units, such as prefectures; nodes of the third layer further branching from each of the nodes of the second layer, and so on. The number of layers and how and to which range to divide the region represented by each node may be easily determined by system design.

In the present example, in the attribute tree related to the place name, the root node represents Japan as whole. The attribute tree of the place name in accordance with the present embodiment is not limited to such a tree. An attribute tree representing a wider area, such as Asia or even wider, such as the whole globe, may be used.

The attribute tree has a structure that clearly defines hierarchical relations between the nodes, in order to allow for accumulative bids related to the attribute and to clearly determine which of the bids is valid. Except for the root node, every node has only one parent node, and nodes branching from one same node and belonging to the same layer designate ranges different from each other.

With the nodes configured in this manner, assume that there is a bid designating a node of a certain layer. Here, it is possible to place a bid designating a layer lower than and a bidding price higher than that node. Then, the existing bid will be valid only for the range other than the range designated by the new bid.

In the present embodiment, if there is a bid designating a node of a certain layer, it is also possible to place a bid designating a node of a layer upper than that node. In that case, however, in the present embodiment, the new bid must designate a bidding price higher than any bid designating the subtree having the newly designated node as the root node. If such a condition is satisfied, the new bid becomes valid, and all bids designating lower nodes become invalid.

In the attribute tree, among the nodes of the same layer, the ranges designated by values corresponding to the nodes do not overlap with each other, and a range designated by a value of a node of a certain layer encompasses the whole ranges designated by the values of all nodes branching from the node. Specifically, the attribute tree represents, in the form of a tree, the inclusion relation among the attribute values of an attribute of a certain type.

### [Program Structure]

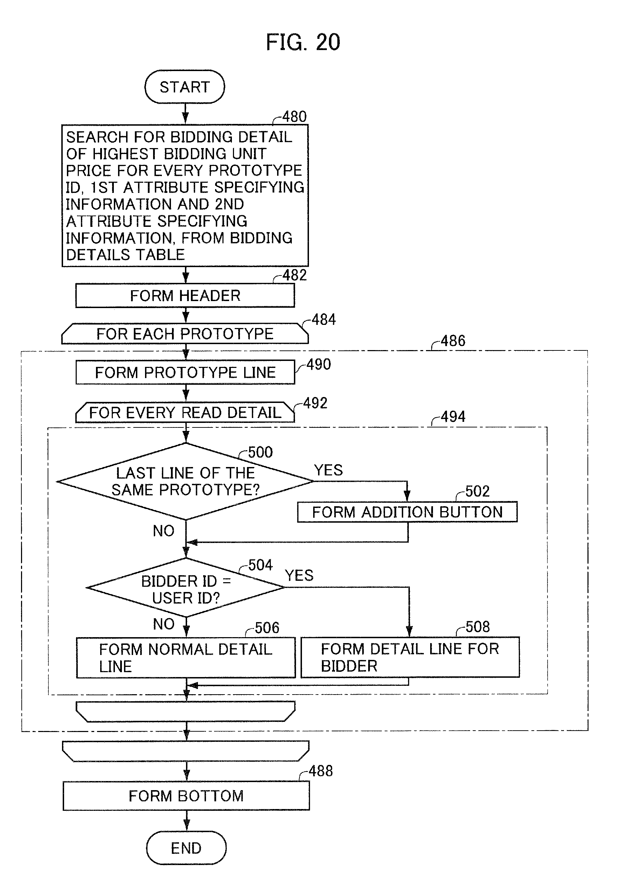

Referring to Fig. 20, the control structure of the program executed by the server that received a request for displaying the bidding initial screen from a terminal will be described. The program includes: a step 480 of searching for a bidding detail of the highest bidding price for each prototype ID, the first attribute specifying information and the second attribute specifying information, from the bidding details table; a step 482 of reading a record of the auction that is the object of current auction from the auction master table and preparing a header portion of the bidding initial screen; a step 484 of executing a prototype details forming routine 486, which will be described later, for each prototype; and a step 488 of forming a bottom portion including the "RETURN" button and the "PLACE A BID" button.

Prototype details forming routine 486 includes: a step 490 of forming a prototype detail line for the prototype as the object of processing; and a step 492 of executing a bidding detail line forming routine 494 for all bidding details having, as the prototype ID, the ID of the prototype as the object of processing, among the bidding details read at step 480.

Bidding detail line forming routine 494 includes: a step 500 of determining whether or not the bidding detail line as the object of processing is the last bidding detail line related to the prototype as the object of processing and branching the control flow depending on the result of determination; a step 502, executed if the determination at step 500 is positive, of forming an addition button (the plus button shown in Fig. 14) for instructing addition of the bidding detail; and a step 504, executed if the determination at step 500 is negative or if the determination at step 500 is positive and the process at step 502 is completed, of determining whether or not the bidder ID of the bidding detail as the object of processing matches the bidder ID of the user who transmitted the request for displaying the bidding initial screen, and branching the control flow depending on the result of determination.

Bidding detail line forming routine 494 further includes: a step 508 executed if the determination at step 504 is positive, of forming the bidding detail line displayed in the emphasized manner for the bidder and ending execution of this routine; and a step 506, executed if the determination at step 504 is negative, of forming a common bidding detail line and ending execution of this routine.

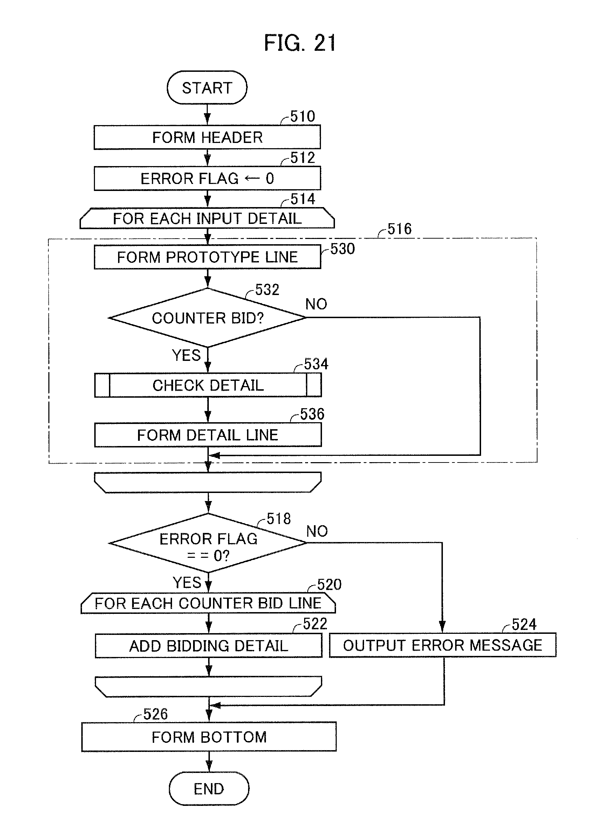

Referring to Fig. 21, the server program for processing information transmitted when the user presses the "PLACE A BID" button on the terminal has such a control structure as described in the following.

The program includes: a step 510 of forming a header of a screen displayed after the bidding process; a step 512 of resetting an error flag for determining whether or not the input bidding detail has any error; a step 514 of executing a bidding check routine 516 as will be described later for the bidding detail transmitted from the terminal; and a step 518 executed after the process of step 514, of determining whether or not the error flag is 0, and branching the control flow in accordance with the result of determination.

In the present embodiment, basically, whether or not the bidding through the terminal is valid over the past bidding data is determined on the terminal at the time of input at the terminal. The bid that has passed the determination is transmitted to the input server. Therefore, basically, it is not likely that the input involves any error, even when such a check is not conducted on the server. The check on the terminal side, however, is done based on the bidding detail when the request for displaying the bidding initial screen is received by the server. Therefore, it is still possible that two or more bidders place competing bids for one same protocol substantially at the same time. For this reason, in the present embodiment, bidding check routine 516 is executed just to make sure that competing bids, if any, are checked.

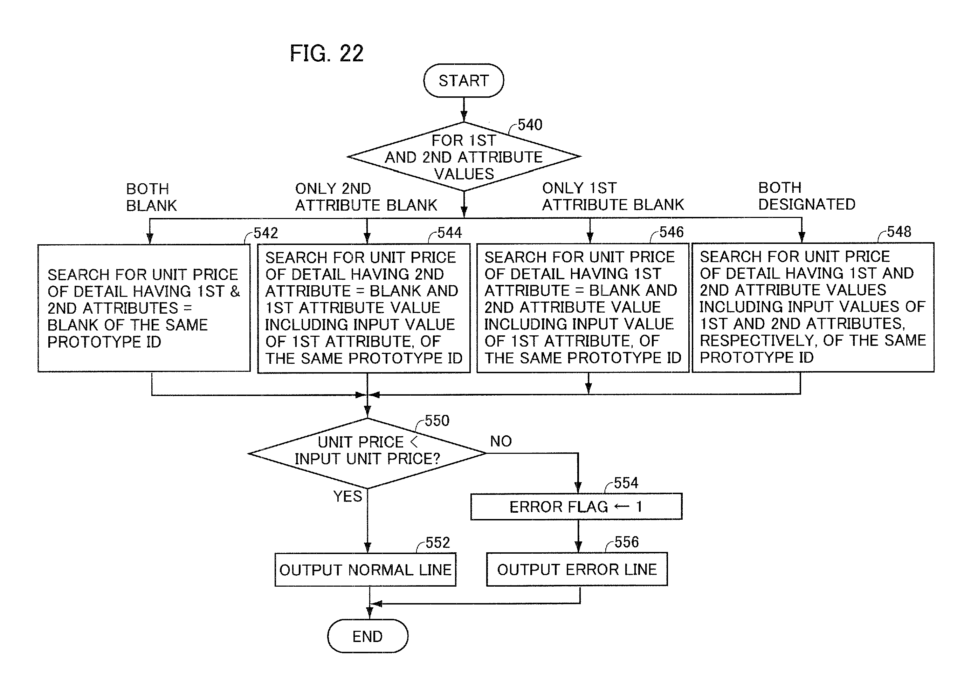

Bidding check routine 516 includes: a step 530 of forming a prototype line displaying information related to the prototype corresponding to the bidding details as the object of processing; a step 532 of determining whether or not a bid corresponding to the bidding detail as the object of processing is placed from the terminal, and branching the control flow depending on the result of determination; a step 534, executed if the determination at step 523 is positive, of checking the bidding detail as the object of processing; and a step 536 of forming the bidding detail line of the screen to be displayed in accordance with the result of step 534 and ending the process. If the determination at step 532 is negative, execution of bidding check routine 516 ends. The contents of processing at step 534 will be described later with reference to Fig. 22.

The program further includes: a step 520, executed if the determination at step 518 is positive, of executing a step 522 of forming a bidding detail record corresponding to the input contents for each line to which a bid has been placed, received from the terminal, and adding the record to bidding details table; a step 524 executed if the determination at step 518 is negative, of outputting an error message; and a step 526, executed after step 522 or after step 524, of forming the bottom portion of the screen to be displayed and ending the process.

Referring to Fig. 22, the routine of bidding detail line checking process executed at step 534 of Fig. 21 has the following control structure. Specifically, the routine includes: a step 540 of branching the control flow depending on whether or not the first and second attributes of bidding detail line as the object of checking are blank; a step 542, executed if the first and second attributes are both blank, of searching for a bidding detail record having the same prototype ID as the bidding detail line as the object of processing and having first and second attributes left blank, from the bidding details table and checking the highest bidding price thereof; and a step 544, executed if the first attribute is not blank and the second attribute is blank, of searching for a bidding detail record having the same prototype ID as the bidding detail line as the object of processing, having the second attribute blank and having, as the first attribute, such a value that encompasses the input value of the first attribute (that includes a node upper than the input value of the first attribute on the attribute tree and includes a node corresponding to the input value of the first attribute in the subtree having the node as a root node) from the bidding details table and taking out the highest bidding price thereof.

The routine further includes: a step 546, executed if the first attribute is blank and the second attribute is not blank, of searching for a bidding detail record having the same prototype ID as the bidding detail line, having the first attribute blank and having, as the second attribute, such a value that encompasses the input value of the second attribute (that includes a node upper than the input value of the second attribute on the attribute tree and includes a node corresponding to the input value of the second attribute in the subtree having the node as a root node) from the bidding details table and taking out the highest bidding price thereof; and a step 548, executed if the first and second attributes are both not blank, of searching for a bidding detail record having the same prototype ID as the bidding detail line, having a value that encompasses the input value of the first attribute as the first attribute and having a value that encompasses the input value of the second attribute as the second attribute, from the bidding details table and taking out the highest bidding price thereof.

The routine further includes: a step 550, following step 542, 544, 546 or 548, of determining whether or not the input bidding price for the bidding detail is higher than the bidding price of the bidding detail record searched out at these steps, and branching the control flow depending on the result of determination: a step 552, executed if the determination at step 550 is positive, of forming and outputting data of a normal line in accordance with the bidding detail line as the object of processing and ending execution of this routine; a step 554, executed if the determination at steps 550 is negative, of setting the error flag to 1; and a step 556, following step 554, of forming data of the error line in accordance with the bidding detail line as the object of processing, and ending execution of this routine.

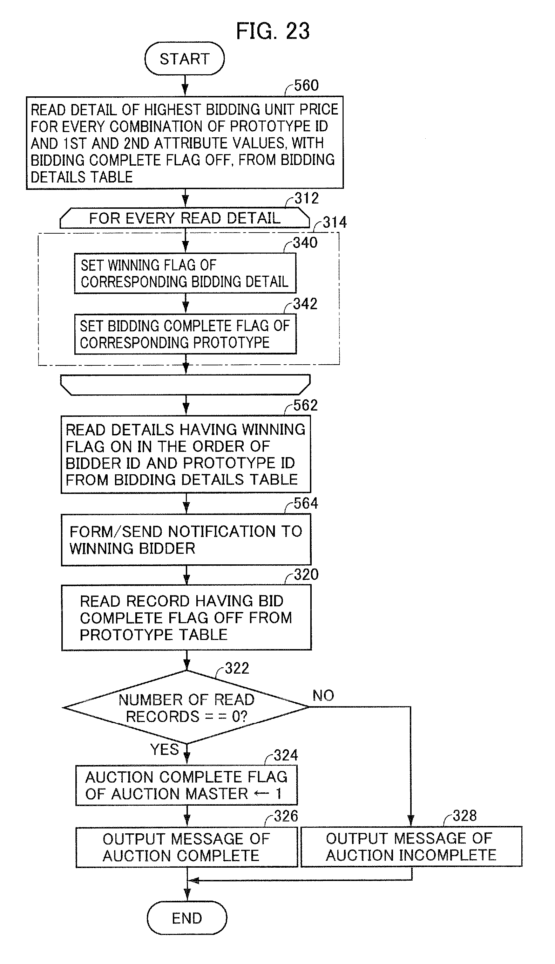

Referring to Fig. 23, the program realizing the bid-closing process that takes place in the server in accordance with the second embodiment has such a control structure as described in the following. Specifically, the program includes: a step 560, of extracting a bidding detail record having the highest bidding price, for each combination of prototype ID and first and second attribute values, for the records of which bidding complete flag is off, from the bidding details table; a step 312 of executing the same process as shown in Fig. 9 on all the details extracted at step 560; and a step 562, following step 312, of reading details of which winning flag is on in the order of bidder ID and the prototype ID, from the bidding details table. Each of the details read at this step determines the winning bidder. The records of these winning details are added to winning bid information table 178.

The program further include: a step 564 of forming and sending successful bidding result to each of the winning bidders determined based on the bidding details read at step 562; and steps 322 to 328, following step 564, of executing the same process as shown in Fig. 9 and ending the process.

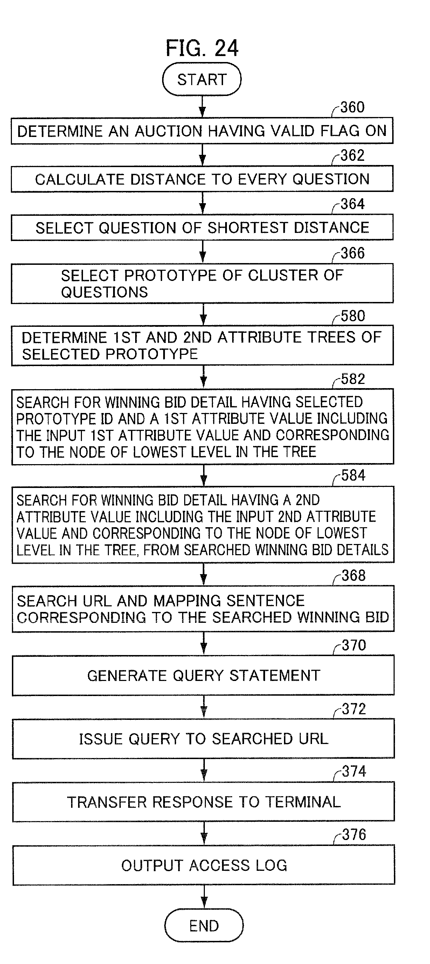

Referring to Fig. 24, the control structure of a program executed by specific site retrieval service unit 406 when specific site retrieval service unit 406 in accordance with the present embodiment receives a request for information retrieval will be described. The following description relates to various modules following the question-searching unit 132 in specific site retrieval service unit 406.

The program includes: steps 360 to 366 of executing the same process as already described with reference to Fig. 10; and a step 580, following step 366, of reading, for the prototype selected at step 366, the first and second attribute trees from attribute tree storage unit 422 based on the description in the prototype. At this step, if the attribute value of the bidding detail line is blank, reading of the attribute tree is not executed, and the process steps related thereto are not executed thereafter. In the following description and in the drawings, however, the process when the attribute value is blank is not described, for easier understanding.

The program further includes: a step 582, following step 580, of searching for a winning bid detail record having the prototype ID of the selected prototype and the first attribute value encompassing the first attribute value of the bidding detail line and corresponding to the node of the lowest level of the tree, from the winning bid information table; a step 584, following step 582, of extracting winning bid detail record having the prototype ID of the selected prototype and the second attribute value encompassing the second attribute value of the bidding detail line and corresponding to the node of the lowest level in the tree, from the winning bid details searched out at step 582; and steps 368 to 376 executing the same processes as described with reference to Fig. 10 and ending the process.

### <Operation>

Information retrieval service system 400 in accordance with the second embodiment described above operates in the following manner. Information retrieval service system 400 also has three operation phases. The first phase is an auction preparation phase. The second phase is an auction phase. The third phase is an operation phase of the specific site retrieval service based on the result of auction.

The auction preparation phase is basically the same as that of the first embodiment. It is noted, however, that the values of the first and second attributes (if any) are tagged, together with the keyword, to the prototype. Further, for each type of attributes, an attribute tree is prepared in advance and stored in a machine-readable manner, in a machine-readable attribute tree storage unit 422.

When the auction start time is reached, auctioning unit 420 starts a prescribed auction under the control of auction management unit 108. When a request for displaying the bidding initial screen related to the currently ongoing auction is applied by an auction bidder 402 to auction system 404, auctioning unit 420 operates in the following manner.

Auctioning unit 420 forms a bidding initial screen 450 (see Fig. 13) related to the ongoing auction, and displays it on the bidder's terminal. Bidding initial screen 450 includes pieces of information and scripts necessary for executing all the processes as will be described below. If the bidder clicks a right-pointing triangle at the head of any of the detail lines of any prototype, the terminal executes scripts when the right-pointed triangle is clicked, and displays a screen similar to screen 452 shown in Fig. 14. If the bidder presses "RETURN" on this screen, the screen returns to the one shown in Fig. 13. Here, it is preferred that the bidding initial screen 450 is re-generated on the server, in addition to the process that takes place on the terminal.

When the bidder selects "YES" for bidding on the screen 452 shown in Fig. 14 or if he/she selects addition of a detail, the terminal executes a corresponding script, and displays, for example, screen 456 shown in Fig. 16. After necessary inputs, when the bidder presses "PLACE A BID" button, information related to the bidding detail line is transmitted to auctioning unit 420. When a counter bid is placed, auctioning unit 420 checks its contents and if there is no error, it adds the contents of the bid to the bidding details table. If there is any error, the contents of the bid are not added to the bidding details table, and an error screen is displayed on the terminal.

While such a process is executed repeatedly, when the auction end time is reached, auction management unit 108 controls updating unit 424 to conduct the bid-closing process. In the bid-closing process, updating unit 424 extracts a bidding detail record of the highest bidding price for each combination of prototype ID and the first and second attribute values, from the bidding details table while referring to the attribute trees stored in attribute tree storage unit 422, and adds the extracted record to the winning bid information table as a winning bid detail record. As in the first embodiment, updating unit 424 updates question-URL correspondence DB 408 and mapping corpus 410 in accordance with the results of successful bidding. Further, the results of successful bidding are also applied to billing unit 152. Billing unit 152 stores information (bidding price information and the like) necessary for the subsequent billing process.

In the auction phase, information retrieval service system 400 (particularly, specific site retrieval service unit 406) operates in the following manner. When the bid-closing process is completed for the auction and the auction start time is reached, auction management unit 108 sets the operation start flag of the auction.

When a search request by voice for information comes from terminal 44, voice input front-end 60 converts the search request to a string of characters and applies it to question-analyzing unit 130 by the process similar to that of the first embodiment. Question-analyzing unit 130 performs processes including morphological analysis on the string of characters, and applies strings of morphemes having semantic and part-of-speech tags added, to question-searching unit 132. Question-searching unit 132 calculates the distance between the string of morphemes and each question included in corpus storage device 64, extracts a question having the shortest distance to the input string of morphemes, and applies it to URL searching unit 430. URL searching unit 430 reads a URL corresponding to the applied question from question-URL correspondence DB 408, and applies it to query generating unit 432 together with the string of morphemes of information search request. Query generating unit 432 reads a mapping corpus corresponding to the selected question from mapping corpus 410, extracts a keyword from the applied string of morphemes, and inserts it to the position corresponding to the keyword in the mapping corpus, to form a query. The formed query is applied to query issuing unit 138. Query issuing unit 138 designates the URL read by URL searching unit 430 and transmits it to service site 42. The information returned from service site 42 is applied through query issuing unit 138 to query-result transmitting unit 140. Query-result transmitting unit 140 transmits the query-result to service use terminal 48 that first transmitted the information search request. At the same time, query-result transmitting unit 140 writes a search log to search log storage unit 150.

Information retrieval service system 400 repeats the above-described process for the received information search request. As a result, for each information search request, a question closest to the information search request is read from corpus storage device 64, and the information query is put on the site operator who has successfully bid the prototype of the cluster to which the question belongs. The result of query is returned to the issuer of the information search request. As a result, the user who issued the information search request is directly guided to the service of the service provider who provides information appropriate for the information search request, who has successfully bid in the auction, rather than to a mere list of search results. Thus, the user can save the trouble for getting the necessary information. The site operator can guide potential customers to his/her site by successfully bidding the prototype sentence designating a range most effective for the site he/she operates as the attribute. If a site targets a small region, a prototype can be successfully bid with a relatively high price for the small region. It is unnecessary to place a bid with high price for a wide area that is not the object of interest. In contract, if a site targets a wide region, a bid with relatively low price can be placed, designating a wide region.

In the embodiment described above, if there is a preceding bidding detail with higher price, a later bidder must place a bid with higher price even if designated range is wider. The present invention, however, is not limited to such an embodiment. By way of example, assume that a bid is to be placed designating, for a certain attribute, a range wider than the range designate by an existing bidding detail. Then, the bid may be accepted, regarding that the designated range excludes the range designated by the bidding detail of higher bidding price.

### [Third Embodiment]

In the first and second embodiments described above, based on the question similar to the information search request (question) or the keyword included in the information search request, to which site the search request is to be transferred is determined. The manner of transfer is determined cluster by cluster through auction, based on the result of clustering the question corpus. The present invention, however, is not limited to such an embodiment. By way of example, if an attribute is represented by a numerical value, it is possible to hold an auction with the possible range of attribute value divided into a number of ranges of numerical value. In the third embodiment described in the following, the object of auction is divided based on the range where the current position of the terminal issuing the information search request belongs, as the attribute that can be divided into a number of numerical value ranges. The current position of the terminal can practically be abtained from Global Positioning System provided in the terminal. If the terminal is capable of obtaining information related to the position of itself through communication with a base terminal, as in the case of a portable telephone, the terminal may not have the GPS.

The attribute that can be represented by a numerical value is, naturally, not limited to the positional information. By way of example, any attribute that can be represented by a numerical value, including temperature, humidity, age, height, weight, calendar year and price, can be divided to certain ranges and an auction can be held for each of the divided ranges.

In the present embodiments, as in the second embodiment, the ranges to be designated are classified in a hierarchical tree structure similar to the attribute tree. By doing so, it becomes possible to realize an auction with the numerical range designated, using the same logic as in the second embodiment.

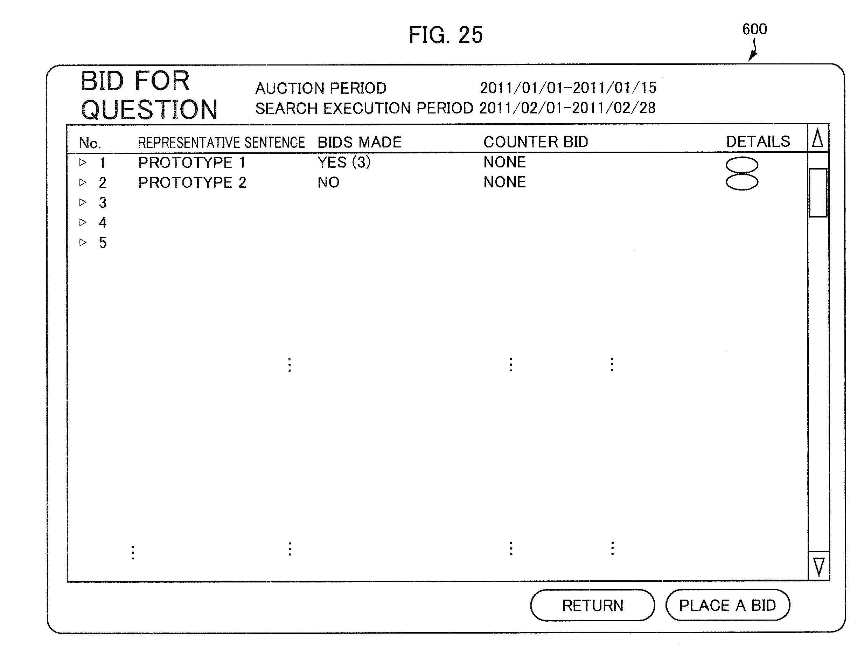

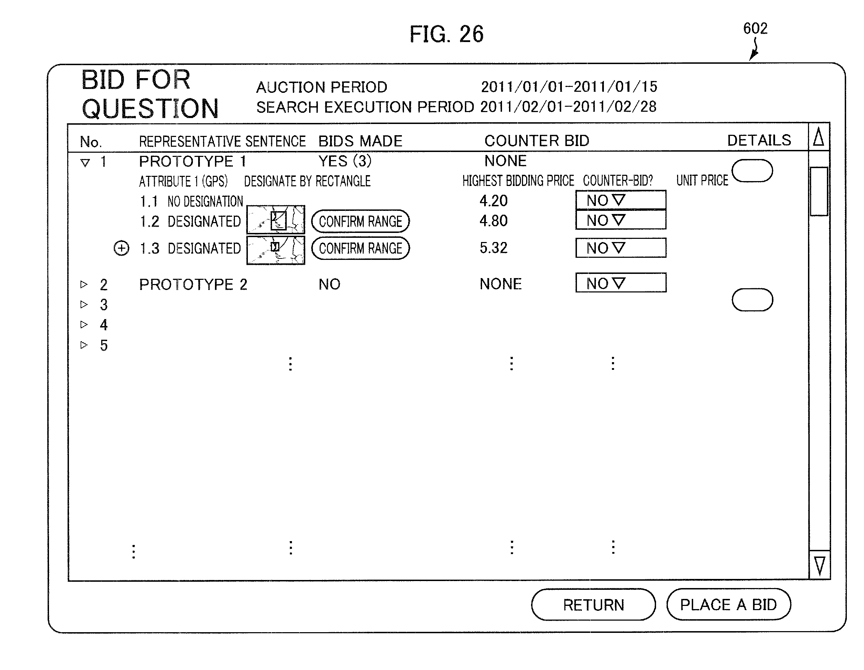

Fig. 25 shows an example of a bidding initial screen 600 in accordance with the present embodiment. Bidding initial screen 600 is basically the same as bidding initial screen 450 shown in Fig. 13. When the right-pointed triangle at the left end of the details line of each prototype on this screen is clicked, the screen makes a transition to a bidding details line display screen 602 shown in Fig. 26.

Referring to Fig. 26, on bidding detail line display screen 602, the triangle at the left end of the detail line of designated prototype changes to a downward-pointing triangle, and the bidding detail lines related to the prototype of the line are shown as a drop-down view below the line. Though the bidding detail line display screen 602 shown in Fig. 26 is similar to screen 452 shown in Fig. 14, it is different in that only the first attribute name is designated as the attribute. The reason for this is that what is designated by the first prototype is only the names of the first attribute, and that the contents of the attribute involve positional information of the information search request. Here, it is supposed that as the positional information accompanying the information search request, the information obtained from GPS of the terminal is usable.

The characteristic feature of the present embodiment is that not a word or the like but a range using a map is used for designating the first attribute. In the example shown in Fig. 26, the designated range is displayed in the column of the attribute, for each bidding detail line. For each range, a "CHECK RANGE" button is displayed aside and if this button is pressed, a map showing the designated range in enlargement is displayed in a separate window.

The process for counter-bidding an existing bidding detail is the same as that described above.

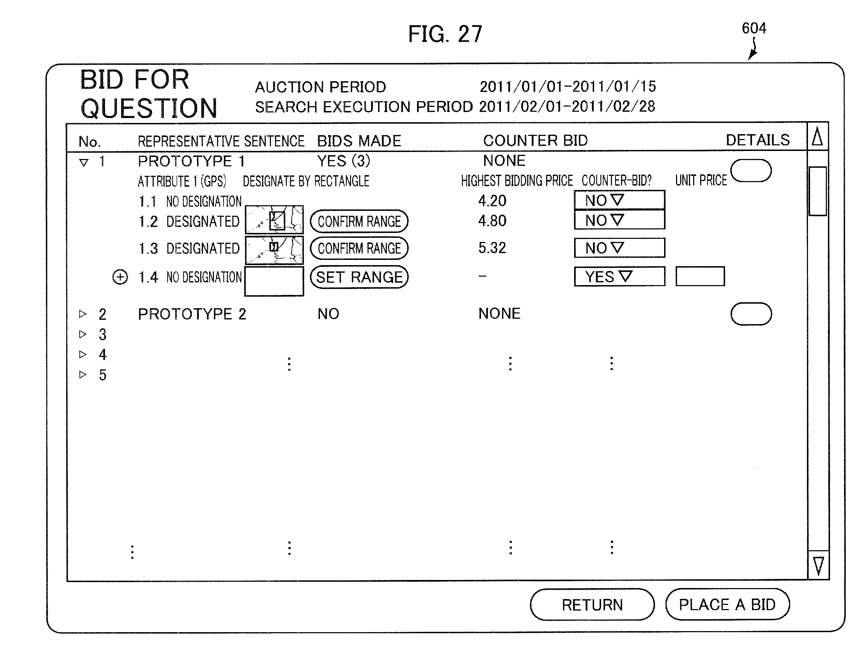

When a new bid is to be placed, the user clicks the plus mark displayed at the left end of the lowest one of the bidding detail lines corresponding to the prototype. Then, the screen makes a transition to a screen 604 shown in Fig. 27. The screen 604 is similar to that shown in Fig. 16 of the second embodiment. It is different, however, in that a "SET RANGE" button is displayed for designating the attribute.

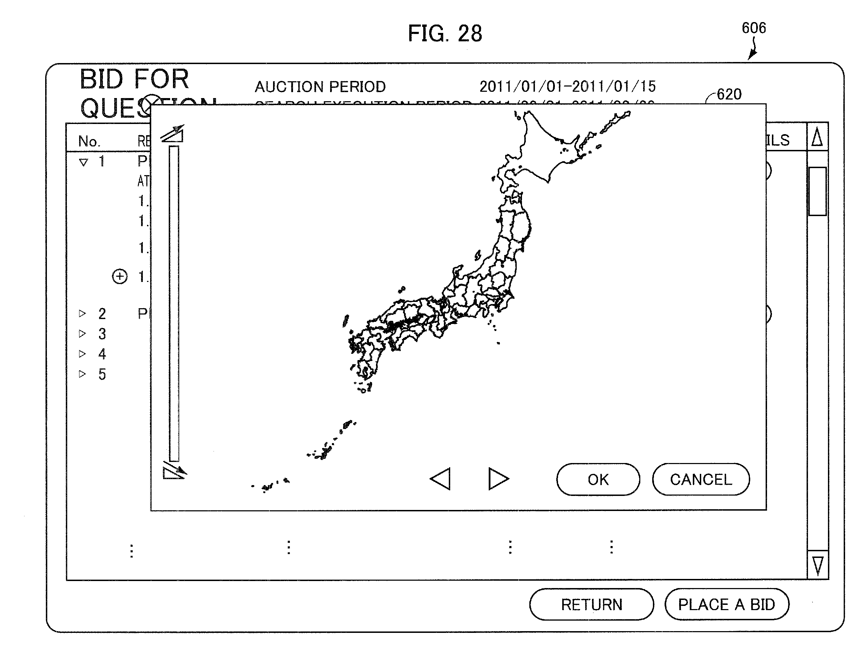

Fig. 28 shows an example of screen 606, which is displayed when the "SET RANGE" button is pressed. In the example shown in Fig. 28, a window 620 for designating two points (upper left and lower right points) for defining a rectangle on a map is displayed overlapped on screen 606. In the present embodiment, the map of Japan as a whole is displayed at first. By using enlarge/reduce button and a zoom button displayed on the left side and by dragging the map, the user obtains the display of a desired range for designation. By designating the area and pressing an "OK" button, the user can designate a region to be selected. In the present embodiment, however, the selectable range is divided into a plurality of regions in a hierarchical manner, and the user can select only one of such regions. By adopting such a method of division, it is possible to simplify the logic of auction, and the system of the present embodiment can be implemented by a program similar to that of the second embodiment.

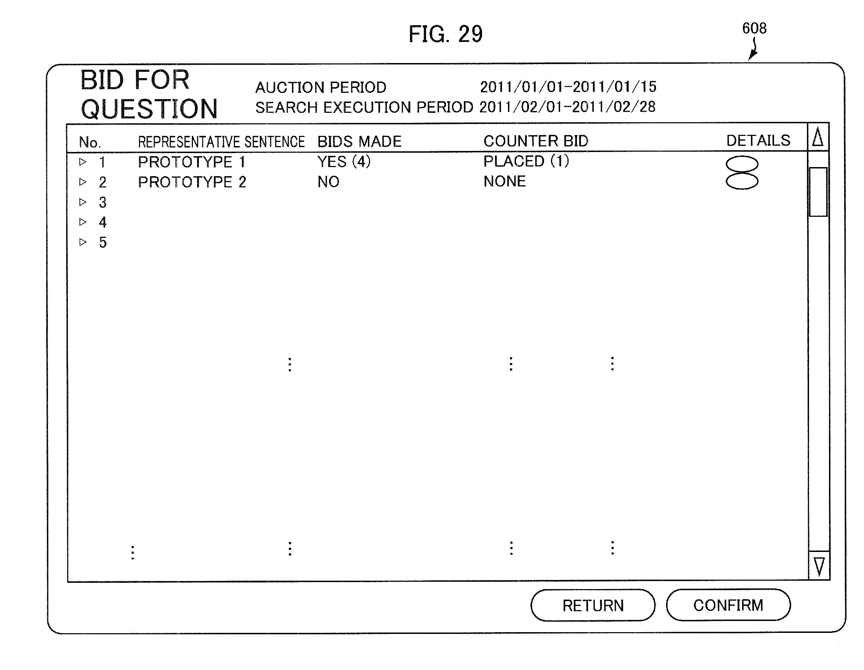

When a range is designated and "OK" is pressed on screen 606 shown in Fig. 28, the display returns to a screen similar to that shown in Fig. 27. When "PLACE A BID" button is further pressed on this screen, the bidding detail is checked by the server and if there is no error, a screen 608 reflecting the result of bidding is displayed as shown in Fig. 29, in the similar manner as in the second embodiment.

Except for these points, the system operation in accordance with the third embodiment is the same as that of the second embodiment. Therefore, details of the system in accordance with the third embodiment will not be described here.

### [Computer Implementation]

Information retrieval service system 40, information retrieval service system 400 and the like in accordance with the first to third embodiments of the present invention have similar hardware configurations. By way of example, information retrieval service system 40 can be implemented by computer hardware having a function of communicating with other devices through the Internet, a program executed by the computer hardware, and data stored in the computer hardware. Control structures of main portions of the program are as shonvn in Figs. 9 and 10 as well as Figs. 20 to 24, and examples of the data structure are as shown in Figs. 5 and 12.

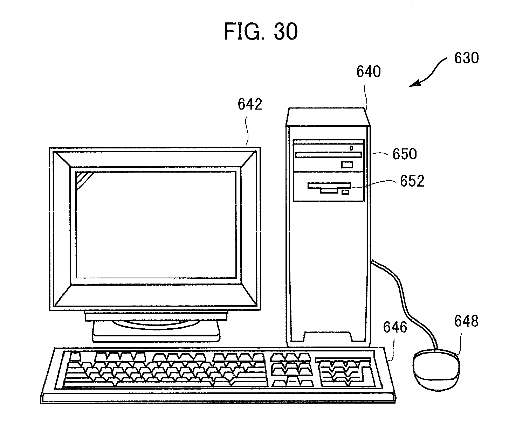

Referring to Fig. 30, an information retrieval server computer 630 includes: a computer 640 having an FD (Flexible Disk) drive 652 and a CD-ROM (Compact Disk Read Only Memory) drive 650; a keyboard 646; a mouse 648; and a monitor 642.

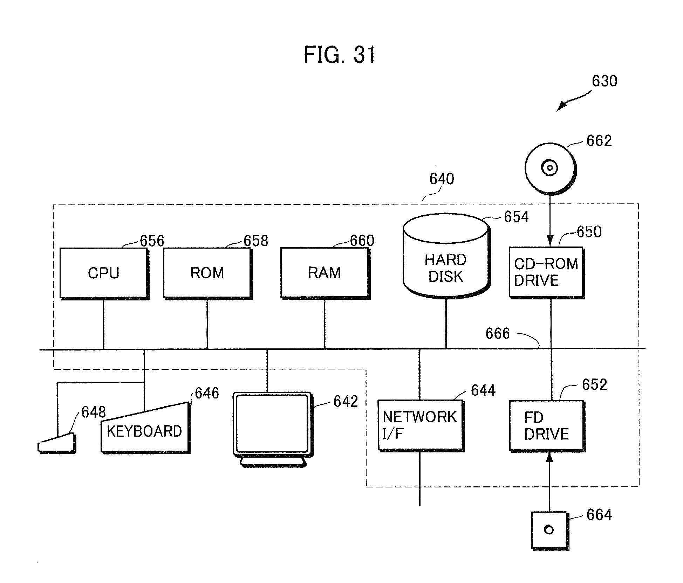

Referring to Fig. 31, in addition to FD drive 652 and CD-ROM drive 650, computer 640 includes: a CPU (Central Processing Unit) 656; a bus 666 connected to CPU 656, FD drive 652 and CD-ROM drive 650; a read only memory (ROM) 658 storing a boot-up program and the like; and a random access memory (RAM) 660 connected to bus 666 for storing program instructions, a system program, working data and the like. Information retrieval server computer 630 further includes a network interface (I/F) 644 for providing connection to the Internet. Though not shown, computer 640 is connected through network I/F 644 to a portable telephone network, and capable of data communication with other terminals.

The computer program or programs causing information retrieval server computer 630 to operate as information retrieval service system 40 or 400 are stored on a CD-ROM 662 or FD 664 that is loaded to CD-ROM drive 650 or FD drive 652, and transferred to hard disk 654. Alternatively, each code segment of the program realizing each of the above-described functions may be transmitted to computer 640 as computer program signals realized on a carrier wave through a network, not shown, and stored in hard disk 654. The program is loaded to RAM 660 when executed. The program may be directly loaded to RAM 660 from CD-ROM 662, FD 664 or through a network.

The program includes a plurality of instructions for operating computer 640 as information retrieval service system 40 or 400 in accordance with the embodiments. Some of the basic functions necessary to realize such operations are provided by an operating system (OS) or a third-party program running on computer 640, or by a module of various tool kits installed in computer 640. Therefore, the program may not necessarily include all the functions necessary to realize the system and method of the embodiments. The program may only include instructions to call appropriate functions or "tools" in a controlled manner to realize desired results to execute the operation as information retrieval service system 40 or 400.

Information retrieval server computer 630 is implemented by a common computer. Since general operations of a computer are well known, detailed description thereof will not be given here.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention is usable for building an information retrieval service for providing the user with advantageous information through, for example, the Internet.

### REFERENCE SIGNS LIST

- 40, 400: information retrieval service system
- 42: service site
- 44: terminal
- 46, 402: site operator
- 48: service using terminal
- 60: voice input front-end
- 62, 404: auction system
- 64: corpus storage device
- 66, 406: specific site retrieval service unit
- 68, 408: question-URL correspondence DB
- 70, 410: mapping corpus
- 72: charging unit
- 100: clustering unit
- 104, 420: auctioning unit
- 106, 426: auction data DB
- 112, 424: updating unit
- 130: question analyzing unit
- 132: question-searching unit
- 134, 430: URL searching unit
- 136, 432: query generating unit
- 138: query issuing unit
- 140: query-result transmitting unit
- 160: set of questions
- 162: set of prototypes
- 170: bidder table
- 172, 434: prototype table
- 174: auction master table
- 176, 436: bidding details table
- 178: winning bid information table
- 180: mapping corpus table
- 196: inquiry processing unit
- 198: bidding processing unit
- 200: registration information maintenance unit
- 202: winning bid information display unit
- 204: mapping management unit
- 260: auction master updating unit
- 262: bid-closing unit
- 264: winning bid notifying unit
- 266: operation DB updating unit
- 422: attribute tree storage unit
- 470: attribute tree

## Claims

1. An information retrieval service-providing device, comprising:
a machine-readable storage device storing a plurality of machine-readable sentences;
a network interface;
an auction executing device, connected to said storage device and said network interface, associating each of said plurality of sentences stored in said storage device with a winning bidder and with a contract price by an online auction through said network interface;
a URI storage device, connected to said storage device, said network interface and said auction executing device, receiving and storing, for each of said plurality of sentences, a URI designated through said network interface by the winning bidder associated with said sentence by said auction executing device;
a sentence searching device, connected to said network interface and said storage device, searching, in response to reception of an information search request sentence through said network interface, for a sentence having shortest defined distance to said search request sentence among said plurality of sentences stored in said storage device; and
an information transmitting device, connected to said sentence searching device and said URI storage device, transmitting a query generated from said search request sentence to the URI stored in said URI storage device corresponding to the sentence searched out by said sentence searching device, and thereby causing information obtained from said URI to be transmitted to a terminal that transmitted said search request sentence.

2. The information retrieval service-providing device according to claim 1, wherein
said auction executing device includes
a representative sentence determining device, connected to said storage device, classifying said plurality of sentences stored in said storage device into a plurality of clusters using a distance defined between each sentence as a reference, and determining a representative sentence representing each cluster,
a representative sentence auction executing device, connected to said representative sentence determining device and said network interface, executing an on-line auction for each of said representative sentences and thereby determining a winning bidder and a contract price for each of said representative sentences,
a price allocating device connected to said representative sentence auction executing device and said storage device, associating, in response to completion of the auction by said representative sentence auction executing device, each of said plurality of sentences with the winning bidder and with the contract price of the representative sentence of the cluster to which said sentence belongs, and
a URI storage device, connected to said network interface, said storage device and said price allocating device, storing, for each of said plurality of sentences, in response to an input of a URI from the winning bidder associated with the sentence through said network interface, the URI in association with the sentence.

3. The information retrieval service-providing device according to claim 2, wherein said distance used in said representative sentence determining device and said sentence searching device is calculated by the same method.

4. The information retrieval service-providing device according to claim 1, wherein said information transmitting device includes
a mapping rule storage device storing, for each of the URIs stored in said URI storage device, a query template for generating a query to be transmitted to the URI and a mapping rule for mapping a word included in said search request sentence to a word inserting position of said query template to generate the query,
a parsing device, in response to reception of an information search request sentence by said sentence searching device, parsing said search request sentence, attaching an attribute to each word and outputting a search request sentence with attribute,
a query transmitting device, generating a query based on the sentence searched out by said sentence searching device and on the template and the mapping rule stored in said mapping rule storage device corresponding to the URI associated with the sentence, and transmitting the query to the URI stored in said URI storage device corresponding to the sentence searched out by said sentence searching device, and
an information transferring device causing a reply to the query transmitted by said query transmitting device to be transferred to a terminal that transmitted said search request sentence.

5. The information retrieval service-providing device according to claim 1, wherein
each of said representative sentences includes a keyword having a predetermined type of attribute and an attribute value attached; and
said auction executing device includes
an inclusion relation storage device storing, for each type of attribute, inclusion relation information defining an inclusion relation of attribute values,
a bid-placing device receiving, for each of said representative sentences, a bid from a bidder designating, for each type of attribute of a keyword included in the representative sentence, an attribute value and a bidding price, and
a winning bidder determining device determining, for the bids received by said bid-placing device, a winning bidder of each representative sentence by determining mutually exclusive range of successful bidding in accordance with the bidding price and the inclusion relation stored in said inclusion relation storage device.

6. The information retrieval service-providing device according to claim 5, wherein said winning bidder determining device includes
an inclusion relation determining device determining, for a plurality of bids placed for the same representative sentence, designating different attribute values with respect to the same type of attribute of a keyword, inclusion relation between ranges determined respectively by said designated attribute values, based on the inclusion relation related to the attribute stored in said inclusion relation storage device, and
a device determining a range of winning bid designated by the attribute value for said representative sentence in accordance with the result of determination of inclusion relation by said inclusion relation determining device and determining, for each winning bid range, a winning bidder in accordance with the bidding price designating corresponding attribute value.

7. The information retrieval service-providing device according to claim 1, further comprising
a charging device, connected to said information transmitting device, executing, in response to transmission of information by said information transmitting device, a charging process in accordance with the winning bidder and the contract price corresponding to the sentence searched out by said sentence searching device as a trigger of said transmission.

8. A device for building a database to be used for providing an information retrieval service, comprising:
a machine-readable storage device storing a plurality of machine-readable sentences;
a network interface;
an auction executing device, connected to said storage device and said network interface, associating each of said plurality of sentences stored in said storage device with a winning bidder and with a contract price by an online auction through said network interface;
a URI storage device connected to said storage device, said network interface and said auction executing device, receiving and storing, for each of said plurality of sentences, a URI designated through said network interface by the winning bidder associated with said sentence by said auction executing device; and
an associating device associating said plurality of sentences stored in said storage device with URIs stored in said URI storage device.

9. The device for building a database to be used for providing an information retrieval service according to claim 8, wherein
said auction executing device includes
a representative sentence determining device, connected to said storage device, classifying said plurality of sentences stored in said storage device into a plurality of clusters using a distance defined between each sentence as a reference, and determining a representative sentence representing each cluster,
a representative sentence auction executing device, connected to said representative sentence determining device and said network interface, executing an on-line auction for each of said representative sentences and thereby determining a winning bidder and a contract price for each of said representative sentences,
a price allocating device connected to said representative sentence auction executing device and said storage device, associating, in response to completion of the auction by said representative sentence auction executing device, each of said plurality of sentences with the winning bidder and with the contract price of the representative sentence of the cluster to which said sentence belongs, and
a URI storage device, connected to said network interface, said storage device and said price allocating device, storing, for each of said plurality of sentences, in response to an input of a URI from the winning bidder associated with the sentence through said network interface, the URI in association with the sentence.

10. The device for building a database to be used for providing an information, retrieval service according to claim 8, wherein
each of said representative sentences includes a keyword having a predetermined type of attribute and an attribute value attached; and
said auction executing device includes
an inclusion relation storage device storing, for each type of attribute, inclusion relation information defining an inclusion relation of attribute values,
a bid-placing device receiving, for each of said representative sentences, a bid from a bidder designating, for each type of attribute of a keyword included in the representative sentence, an attribute value and a bidding price, and
a winning bidder determining device determining, for the bids received by said bid-placing device, a winning bidder of each representative sentence by determining mutually exclusive range of successful bidding in accordance with the bidding price and the inclusion relation stored in said inclusion relation storage device.

11. The device for building a database to be used for providing an information retrieval service according to claim 10, wherein
said winning bidder determining device includes
an inclusion relation determining device determining, for a plurality of bids placed for the same representative sentence, designating different attribute values with respect to the same type of attribute of a keyword, inclusion relation between ranges determined respectively by said designated attribute values, based on the inclusion relation related to the attribute stored in said inclusion relation storage device, and
a device determining a range of winning bid designated by the attribute value for said representative sentence in accordance with the result of determination of inclusion relation by said inclusion relation determining device and determining, for each winning bid range, a winning bidder in accordance with the bidding price designating corresponding attribute value.

12. An information retrieval service-providing device, comprising:
a machine-readable first storage device storing a plurality of machine-readable sentences;
a network interface;
a machine-readable second storage device storing, for each of said plurality of sentences stored in said first storage device, a user and a specific URI; and
a sentence searching device, connected to said network interface and said first storage device, searching, in response to reception of an information search request sentence through said network interface, for a sentence having shortest defined distance to said search request sentence among said plurality of sentences stored in said first storage device; further comprising
an information transmitting device, connected to said sentence searching device and said second storage device, transmitting a query generated from said search request sentence to the URI stored in said second storage device corresponding to the sentence searched out by said sentence searching device, and thereby causing information obtained from said URI to be transmitted to a terminal that transmitted said search request sentence.

13. The information retrieval service-providing device according to claim 12, wherein
said information transmitting device includes
a mapping rule storage device storing, for each of the URIs stored in said second storage device, a query template for generating a query to be transmitted to the URI and a mapping rule for mapping a word included in said search request sentence to a word inserting position of said query template to generate the query,
a parsing device, in response to reception of an information search request sentence by said sentence searching device, parsing said search request sentence, attaching an attribute to each word and outputting a search request sentence with attribute,
a query transmitting device, generating a query based on the sentence searched out by said sentence searching device and on the template and the mapping rule stored in said mapping rule storage device corresponding to the URI associated with the sentence, and transmitting the query to the URI stored in said second storage device corresponding to the sentence searched out by said sentence searching device, and
an information transferring device causing a reply to the query transmitted by said query transmitting device to be transferred to a terminal that transmitted said search request sentence.

14. The information retrieval service-providing device according to claim 12, wherein
said second storage device further stores, for each of said plurality of sentences, a price for charging;
said information retrieval service-providing device further comprising
a charging device, connected to said information transmitting device, executing, in response to transmission of information by said information transmitting device, a charging process in accordance with a user and a price stored in said second storage device corresponding to the sentence searched out by said sentence searching device as a trigger of said transmission.

15. In a computer connected to a machine readable storage device storing a plurality of sentences and a network interface, an information retrieval service-providing method, comprising:
an auction executing step of associating each of said plurality of sentences stored in said storage device with a winning bidder and with a contract price by an online auction through said network interface;
a URI storage step of receiving and storing in said storage device, for each of said plurality of sentences, a URI designated through said network interface by the winning bidder associated with said sentence at said auction executing step;
a sentence searching step of searching, in response to reception of an information search request sentence through said network interface, for a sentence having a prescribed relation to said search request sentence among said plurality of sentences stored in said storage device; and
an information transmitting step of transmitting a query generated from said search request sentence to the URI stored in said URI storage device corresponding to the sentence searched out at said sentence searching step, and thereby causing information obtained from said URI to be transmitted to a terminal that transmitted said search request sentence.

16. A computer program signal realized on a carrier wave, comprising:
an auction executing code segment, associating each of a plurality of sentences stored in a machine-readable storage device with a winning bidder and with a contract price by an online auction;
a URI storage code segment, receiving on-line and storing in said storage device, for each of said plurality of sentences, a URI designated by the winning bidder associated with said sentence by said auction executing code segment;
a sentence searching code segment, searching, in response to reception of an information search request sentence on-line, for a sentence having shortest defined distance to said search request sentence among said plurality of sentences stored in said storage device; and
an information transmitting code segment, transinitting a query generated from said search request sentence to the URI stored in said URI storage device corresponding to the sentence searched out by said sentence searching code segment, and thereby causing information obtained from said URI to be transmitted to a terminal that transmitted said search request sentence.
